# EUROPÄISCHE PATENTANMELDUNG

(11) **EP 4 632 979 A2**
(43) Veröffentlichungstag der Anmeldung: **15.10.2025**
(21) Anmeldenummer: 25169802.3
(22) Anmeldetag: 10.04.2025
(51) Int. Cl.: H02H 3/08, B60L 3/04, H02J 7/00, H02H 3/087, H02H 5/04, H02H 7/18, H02H 1/06, H02H 3/00, H02H 3/10

(54) **ABSCHALTEINRICHTUNG FÜR EINE ELEKTRISCHE LADEVORRICHTUNG, LEISTUNGSVERSORGUNGSVORRICHTUNG MIT EINER SOLCHEN ABSCHALTEINRICHTUNG UND ENERGIESPEICHERVORRICHTUNG MIT EINER SOLCHEN ABSCHALTEINRICHTUNG**

(30) Priorität: 11.04.2024 DE 102024110212
(71) Anmelder: ads-tec Energy GmbH, 72622 Nürtingen (DE)
(72) Erfinder: DREHER, Holger, 71088 Holzgerlingen (DE); OCHS, Holger, 71159 Mötzingen (DE); NEUMANN,Angelika, 76137 Karlsruhe (DE); ZIEGLER,Daniel, 72762 Reutlingen (DE)
(74) Vertreter: Gleiss Große Schrell und Partner mbB

(57) **Zusammenfassung**

Die Erfindung betrifft eine Abschalteinrichtung (1, 1.1, 1.2, 1.3, 1.4, 1.5) für eine elektrische Ladevorrichtung (3, 25, 27) mit einer ein erstes ansteuerbares Leistungshalbleiter-Bauteil (9, 9.1) und ein zweites ansteuerbares Leistungshalbleiter-Bauteil (9, 9.2) aufweisenden Abschaltanordnung (5, 5.1, 5.2, 5.3, 5.4, 5.5) und einer Abschaltsteuervorrichtung (7), wobei
- das erste Leistungshalbleiter-Bauteil (9, 9.1) und das zweite Leistungshalbleiter-Bauteil (9, 9.2) antiseriell angeordnet sind, wobei
- das erste Leistungshalbleiter-Bauteil (9, 9.1) und das zweite Leistungshalbleiter-Bauteil (9, 9.2) eingerichtet sind, um in einem eingeschalteten Zustand einen Ladestrom der Ladevorrichtung (3, 25, 27) zu leiten, wobei
- die Abschaltsteuervorrichtung (7) mit dem ersten Leistungshalbleiter-Bauteil (9, 9.1) und dem zweiten Leistungshalbleiter-Bauteil (9, 9.2) wirkverbunden und eingerichtet ist zu deren jeweiliger Ansteuerung, wobei
- die Abschaltsteuervorrichtung (7) eingerichtet ist, um einen Wert mindestens eines für den Ladestrom charakteristischen Ladeparameters zu erfassen, und
- in Abhängigkeit von dem erfassten Wert das erste Leistungshalbleiter-Bauteil (9, 9.1) und/oder das zweite Leistungshalbleiter-Bauteil (9, 9.2) abzuschalten und dadurch den Ladestrom zu unterbrechen.

Fig. 1

## Beschreibung

Die Erfindung betrifft eine Abschalteinrichtung für eine elektrische Ladevorrichtung, eine Leistungsversorgungsvorrichtung mit einer solchen Abschalteinrichtung und eine Energiespeichervorrichtung mit einer solchen Abschalteinrichtung.

Beim Laden einer Energiespeichervorrichtung, insbesondere eines Elektrofahrzeugs, mittels einer Leistungsversorgungsvorrichtung ist es notwendig zu gewährleisten, dass eine maximale Ladestromstärke und/oder eine maximale Ladespannung nicht überschritten wird, um eine Beschädigung der Energiespeichervorrichtung und/oder der Leistungsversorgungsvorrichtung zu verhindern. Insbesondere ist zu gewährleisten, dass bei einer Fehlfunktion der Leistungsversorgungsvorrichtung und/oder der Energiespeichervorrichtung eine elektrische Verbindung, insbesondere ein Versorgungsstromkreis und/oder Ladestrom, unterbrochen wird.

Es ist bekannt, dass Elektrofahrzeuge eine Sicherung aufweisen, die im Falle einer Fehlfunktion der Leistungsversorgungsvorrichtung den Versorgungsstromkreis und/oder Ladestrom unterbrechen. Kommt es beispielsweise während eines bidirektionalen Ladevorgangs - wenn das Elektrofahrzeug elektrische Energie an die Leistungsversorgungsvorrichtung überträgt - zu einem Kurzschluss in der Leistungsversorgungsvorrichtung, überträgt das Elektrofahrzeug Energie mit einer derart hohen Leistung an die Leistungsversorgungsvorrichtung, dass die Sicherung des Elektrofahrzeugs auslöst. Nachteilig an diesen Sicherungen ist, dass diese beim Öffnen unter einer hohen Stromlast bereits nach wenigen Schaltvorgängen ausgetauscht werden müssen. Solche Sicherungen können ferner in eine Batterie des Elektrofahrzeugs integriert sein. Das Elektrofahrzeug ist nach dem Auslösen der Sicherung nicht mehr funktionsfähig. Zur Wiederherstellung der Funktionsfähigkeit des Elektrofahrzeugs muss das Elektrofahrzeug abgeschleppt und die Sicherung ausgetauscht und/oder manuell aktiviert werden. Alternativ muss nach dem Auslösen der Sicherung die gesamte Batterie ausgetauscht werden.

Weiterhin ist bekannt, dass die Leistungsversorgungsvorrichtungen Schmelzsicherungen aufweisen können. Die Schmelzsicherungen sind eingerichtet, um den Versorgungsstromkreis und/oder Ladestrom bei einer Fehlfunktion der Leistungsversorgungsvorrichtung zu unterbrechen. Nachteilig daran ist, dass eine Reaktionszeit dieser Sicherungen so lange ist, dass sowohl die Sicherung der Leistungsversorgungsvorrichtung als auch die Sicherung des Elektrofahrzeugs ausgelöst wird. Weiterhin ist es nicht möglich, den Versorgungsstromkreis und/oder Ladestrom bei einer Fehlfunktion der Leistungsversorgungsvorrichtung bereits vor dem Auslösen der Sicherung von Elektrofahrzeugen zu unterbrechen und somit eine Funktionsfähigkeit des Elektrofahrzeugs zu erhalten. Problematisch ist außerdem, dass an einer solchen Leistungsversorgungsvorrichtung verschiedenste Elektrofahrzeuge geladen werden können, sodass der Leistungsversorgungsvorrichtung eine Auslösecharakteristik der Sicherung des Elektrofahrzeugs nicht bekannt ist und diese somit auch nicht geschützt werden kann.

Der Erfindung liegt daher die Aufgabe zugrunde, eine Abschalteinrichtung für eine elektrische Ladevorrichtung, eine Leistungsversorgungsvorrichtung mit einer solchen Abschalteinrichtung und eine Energiespeichervorrichtung mit einer solchen Abschalteinrichtung zu schaffen, wobei die genannten Nachteile zumindest teilweise behoben, vorzugsweise vermieden sind.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten Ausführungsformen.

Die Aufgabe wird insbesondere gelöst, indem eine Abschalteinrichtung für eine elektrische Ladevorrichtung mit einer ein erstes ansteuerbares Leistungshalbleiter-Bauteil und ein zweites ansteuerbares Leistungshalbleiter-Bauteil aufweisenden Abschaltanordnung und einer Abschaltsteuervorrichtung geschaffen wird. Das erste Leistungshalbleiter-Bauteil und das zweite Leistungshalbleiter-Bauteil sind antiseriell angeordnet. Das erste Leistungshalbleiter-Bauteil und das zweite Leistungshalbleiter-Bauteil sind eingerichtet, um in einem eingeschalteten Zustand einen Ladestrom der Ladevorrichtung zu leiten. Die Abschaltsteuervorrichtung ist mit dem ersten Leistungshalbleiter-Bauteil und dem zweiten Leistungshalbleiter-Bauteil wirkverbunden und eingerichtet zu deren jeweiliger Ansteuerung. Weiter ist die Abschaltsteuervorrichtung eingerichtet, um einen Wert mindestens eines für den Ladestrom charakteristischen Ladeparameters zu erfassen, und in Abhängigkeit von dem erfassten Wert das erste Leistungshalbleiter-Bauteil und/oder das zweite Leistungshalbleiter-Bauteil abzuschalten und dadurch den Ladestrom zu unterbrechen.

Die Ladevorrichtung kann insbesondere eine Leistungsversorgungsvorrichtung und/oder eine Energiespeichervorrichtung sein.

Vorteilhafterweise liegt eine Reaktionszeit der Abschalteinrichtung, insbesondere des ersten Leistungshalbleiter-Bauteils und/oder des zweiten Leistungshalbleiter-Bauteils, im Mikrosekunden-Bereich. Vorteilhafterweise ist es damit möglich, den Ladestrom der Ladevorrichtung bei einer Fehlfunktion zu unterbrechen, bevor beispielsweise eine zum elektrischen Laden an eine Leistungsversorgungsvorrichtung angeschlossene Energiespeichervorrichtung die Fehlfunktion registriert und insbesondere eine Sicherung der Energiespeichervorrichtung ausgelöst wird. Damit wird vorteilhafterweise eine Beschädigung der Energiespeichervorrichtung - beispielsweise eine Fahruntauglichkeit eines Elektrofahrzeugs - vermieden. Somit werden außerdem Serviceeinsätze zum Ersetzen von Sicherungen in der Ladevorrichtung, insbesondere der Leistungsversorgungsvorrichtung und/oder der Energiespeichervorrichtung, vermieden. Weiterhin ist die Abschalteinrichtung aufgrund des ersten Leistungshalbleiter-Bauteils und/oder des zweiten Leistungshalbleiter-Bauteils vorteilhafterweise eingerichtet, um den Ladestrom reversibel zu unterbrechen. Somit kann der Ladestrom wieder hergestellt werden, ohne dass händisch eine Sicherung ausgetaucht werden muss.

Darüber hinaus ist die Abschalteinrichtung derart eingerichtet, dass der Ladestrom unterbrochen wird, bevor ein Schütz der Ladevorrichtung, insbesondere ein Schütz der Leistungsversorgungsvorrichtung und/oder ein Schütz der Energiespeichervorrichtung, geschaltet wird. Damit wird vorteilhafterweise eine Betätigung des mindestens einen Schütz reduziert und eine unzulässig hohe Stromstärker in dem mindestens einen Schütz - sowie insbesondere dessen Betätigung unter Strom - wird vermieden, wodurch Schäden an dem mindestens einen Schütz reduziert und eine Lebensdauer des mindestens einen Schütz erhöht wird. Weiterhin ist es aufgrund der Vermeidung von hohen Stromstärken in dem mindestens einen Schütz möglich, den mindestens einen Schütz kleiner dimensioniert in Bezug auf die zulässigen Stromstärken auszubilden.

Darüber hinaus wird die Abschalteinrichtung bevorzugt autark - insbesondere unabhängig von der Ladevorrichtung, insbesondere der Leistungsversorgungsvorrichtung und/oder der Energiespeichervorrichtung - betrieben, sodass der Ladestrom vorteilhafterweise auch bei einer Störung der Ladevorrichtung - beispielsweise bei einem Software-Absturz - unterbrochen werden kann.

In einer bevorzugten Ausgestaltung ist die Abschalteinrichtung als autarkes Gerät ausgebildet. Zusätzlich ist die Abschalteinrichtung unabhängig von einer Ausgestaltung der Ladevorrichtung ausgebildet. Damit ist es vorteilhafterweise möglich, die Abschalteinrichtung in eine bereits bestehende Ladevorrichtung insbesondere als Nachrüstbauteil einzubauen.

Weiterhin ist die Abschalteinrichtung vorteilhafterweise geeignet, um einen bidirektionalen Ladestrom zu überwachen. Damit ist vorteilhafterweise eine Überwachung eines Ladestroms von der Energiespeichervorrichtung zu der Leistungsversorgungsvorrichtung und von der Leistungsversorgungsvorrichtung zu der Energiespeichervorrichtung möglich. Insbesondere kann damit ein Vorrichtungsenergiespeicher der Leistungsversorgungsvorrichtung geladen werden oder ein Stromnetz stabilisiert oder temporär gestützt werden. Vorteilhafterweise kann auch im Falle einer Fehlfunktion der Leistungsversorgungsvorrichtung beim bidirektionalen Laden vermieden werden, dass eine Sicherung der Energiespeichervorrichtung auslöst und beispielsweise ein Elektrofahrzeug nicht mehr funktionstüchtig ist. Vielmehr wird vermieden, dass die Sicherung des Elektrofahrzeugs überhaupt einem Betrieb mit von einem normalen Betrieb abweichenden Ladeparametern ausgesetzt wird und der Ladestrom infolgedessen durch die Sicherung unterbrochen wird. Als besonders vorteilhaft erweist sich dies bei Batterien, die eine integrierte Sicherung aufweisen. Diese müssen, aufgrund der nicht ausgelösten Sicherung, nicht mehr kostenintensiv ausgetauscht werden. Vorteilhafterweise kann insgesamt ein Abschleppen und Instandhalten des Elektrofahrzeugs vermieden werden.

Im Kontext der vorliegenden technischen Lehre ist ein positiver Ladestrom eine Energieübertragung von der Leistungsversorgungsvorrichtung zu der Energiespeichervorrichtung. Weiterhin ist im Kontext der vorliegenden technischen Lehre ein negativer Ladestrom eine Energieübertragung von der Energiespeichervorrichtung zu der Leistungsversorgungsvorrichtung.

In einer Ausgestaltung ist die Abschaltanordnung derart eingerichtet, dass ein positiver Ladestrom von dem zweiten Leistungshalbleiter-Bauteil immer geleitet wird. Zusätzlich ist die Abschaltanordnung derart eingerichtet, dass ein positiver Ladestrom von dem ersten Leistungshalbleiter-Bauteil in Abhängigkeit von dem erfassten Wert des mindestens einen charakteristischen Ladeparameters unterbrochen wird. Weiterhin ist die Abschaltanordnung derart eingerichtet, dass ein negativer Ladestrom von dem ersten Leistungshalbleiter-Bauteil immer geleitet wird. Zusätzlich ist die Abschaltanordnung derart eingerichtet, dass ein negativer Ladestrom von dem zweiten Leistungshalbleiter-Bauteil in Abhängigkeit von dem erfassten Wert des mindestens einen charakteristischen Ladeparameters unterbrochen wird. Dies wird vorliegend auch als antiparallele Anordnung, insbesondere als *"antiparallel"* bezeichnet.

Im Kontext der vorliegenden technischen Lehre weist ein Leistungshalbleiter-Bauteil mindestens einen Pluspol und mindestens einen Minuspol auf. Vorzugsweise weist ein Leistungshalbleiter-Bauteil zusätzlich einen Steueranschluss auf, wobei die Abschaltsteuervorrichtung mit dem Steueranschluss elektrisch verbunden ist.

Besonders bevorzugt ist das erste Leistungshalbleiter-Bauteil und/oder das zweite Leistungshalbleiter-Bauteil unidirektional sperrend ausgebildet.

In einer Ausgestaltung ist die Abschaltsteuervorrichtung eingerichtet, um ein Abschaltsignal zu erzeugen und damit den Ladestrom zu unterbrechen.

Unter einem Abschaltsignal wird im Kontext der vorliegenden technischen Lehre insbesondere ein elektrisches Signal verstanden. Das elektrische Signal kann eine Steuerspannung an einem Gate-Anschluss des ersten Leistungshalbleiter-Bauteils und/oder des zweiten Leistungshalbleiter-Bauteils sein.

In einer Ausgestaltung weist die Abschalteinrichtung eine Messvorrichtung auf. Die Messvorrichtung ist eingerichtet, um einen Wert des mindestens einen für den Ladestrom charakteristischen Ladeparameters direkt oder indirekt zu erfassen. Insbesondere sind die Messvorrichtung und die Abschaltsteuervorrichtung derart verbunden, dass der mittels der Messvorrichtung erfasste Wert von der Messvorrichtung an die Abschaltsteuervorrichtung übermittelt wird. Alternativ oder zusätzlich ist die Abschaltsteuervorrichtung eingerichtet, um den mittels der Messvorrichtung erfassten Wert auszulesen.

Dass der Wert des Ladeparameters direkt erfasst wird, bedeutet im Kontext der vorliegenden technischen Lehre insbesondere, dass die Messvorrichtung eingerichtet ist, um eine physikalische Größe des Ladeparameters direkt zu erfassen und, falls der Ladeparameter ein Gradient ist, zeitlich abzuleiten.

Dass der Ladeparameter indirekt erfasst wird, bedeutet im Kontext der vorliegenden technischen Lehre insbesondere, dass die Messvorrichtung eingerichtet ist, um eine von dem Ladeparameter abhängige physikalische Größe - nämlich einen Messwert eines Messparameters - direkt zu erfassen, beispielsweise eine aufgrund eines Stromstärkegradienten über einer Induktivität abfallende Spannung als Messparameter.

Gemäß einer Weiterbildung der Erfindung ist vorgesehen, dass die elektrische Ladevorrichtung eine elektrische Leistungsversorgungsvorrichtung ist. Alternativ oder zusätzlich ist die elektrische Ladevorrichtung eine elektrische Energiespeichervorrichtung.

Gemäß einer Weiterbildung der Erfindung ist vorgesehen, dass die Abschaltsteuervorrichtung eingerichtet ist, um den erfassten Wert mit einem Ladeparameter-Schwellenwert des mindestens einen charakteristischen Ladeparameters zu vergleichen, und in Abhängigkeit von dem Vergleich das erste Leistungshalbleiter-Bauteil und/oder das zweite Leistungshalbleiter-Bauteil abzuschalten und dadurch den Ladestrom zu unterbrechen. Vorteilhafterweise ist es damit möglich, in einfacher und schneller Weise über eine Abschaltung des ersten Leistungshalbleiter-Bauteils und/oder des zweiten Leistungshalbleiter-Bauteils zu entscheiden.

In einer Ausführungsform ist vorgesehen, dass der Ladeparameter-Schwellenwert abhängig von einem ersten Toleranzwert gesetzt wird. Der erste Toleranzwert ist charakteristisch für eine Toleranz des Ladevorgangs, insbesondere des Ladeparameters. Vorteilhafterweise wird damit verhindert, dass aufgrund einer betriebsmäßig üblichen Schwankung des Ladeparameters - die nicht zu einer Beschädigung führen kann - das erste Leistungshalbleiter-Bauteil und/oder das zweite Leistungshalbleiter-Bauteil abgeschaltet wird. Insbesondere erhöht der erste Toleranzwert den Ladeparameter-Schwellenwert.

In einer Ausführungsform wird der Ladeparameter-Schwellenwert - insbesondere zusätzlich - abhängig von einem zweiten Toleranzwert gesetzt, wobei der zweite Toleranzwert charakteristisch ist für eine Auslösetoleranz der Abschalteinrichtung, insbesondere der Abschaltung des ersten Leistungshalbleiter-Bauteils und/oder des zweiten Leistungshalbleiter-Bauteils. Die Auslösetoleranz der Abschaltung ist insbesondere abhängig von einer momentanen Temperatur der die Abschaltung durchführenden Abschaltanordnung und/oder eines Alterungsgrads von elektronischen Bauteilen der Abschaltanordnung. Insbesondere beträgt der zweite Toleranzwert bis zu 20 % des Ladeparameters oder des Ladeparameter-Grenzwerts. Insbesondere erhöht der zweite Toleranzwert den Ladeparameter-Schwellenwert.

Insbesondere wird das erste Leistungshalbleiter-Bauteil und/oder das zweite Leistungshalbleiter-Bauteil ausgeschaltet und damit der Leistungsstrom unterbrochen, wenn der erfasste Wert des Ladeparameters größer ist als der Ladeparameter-Schwellenwert.

In einer Ausgestaltung ist die Abschaltsteuervorrichtung eingerichtet ist, um eine Differenz aus dem erfassten Wert und dem Ladeparameter-Schwellenwert zu bestimmen, und in Abhängigkeit von der Differenz das erste Leistungshalbleiter-Bauteil und/oder das zweite Leistungshalbleiter-Bauteil abzuschalten und dadurch den Ladestrom zu unterbrechen.

In einer weiteren Ausgestaltung ist die Abschaltsteuervorrichtung eingerichtet ist, um eine Änderungsgeschwindigkeit des erfassten Werts, insbesondere einen Gradient, insbesondere einen Ladeparametergradient, zu ermitteln und die Änderungsgeschwindigkeit mit dem Ladeparameter-Schwellenwert, insbesondere einem Gradienten-Schwellenwert, zu vergleichen. Vorzugsweise ist die Abschaltsteuervorrichtung eingerichtet ist, um eine Differenz aus der Änderungsgeschwindigkeit und dem Ladeparameter-Schwellenwert zu bestimmen, und in Abhängigkeit von der Differenz das erste Leistungshalbleiter-Bauteil und/oder das zweite Leistungshalbleiter-Bauteil abzuschalten und dadurch den Ladestrom zu unterbrechen.

In einer bevorzugten Ausgestaltung ist der Ladeparameter-Schwellenwert ein fester Wert. Alternativ ist die Abschalteinrichtung, insbesondere die Abschaltsteuervorrichtung derart eingerichtet, dass der Ladeparameter-Schwellenwert von einem Betreiber der Abschalteinrichtung vorgebbar und/oder - vorzugsweise automatisch - einstellbar ist.

In einer Ausführungsform wird der Wert des Ladeparameters vorzeichenfrei erfasst, insbesondere als Betrag, Betragsquadrat oder Quadratwurzel des Betragsquadrats. Entsprechend ist bevorzugt der Ladeparameter-Schwellenwert eine vorzeichenfreie Größe, insbesondere ein Betrag. Dass der Wert des Ladeparameters den zugeordneten Ladeparameter-Schwellenwert überschreitet, bedeutet somit insbesondere, dass er betragsmäßig größer wird als der Ladeparameter-Schwellenwert, unabhängig vom Vorzeichen des Werts des Ladeparameters.

In einer Ausführungsform ist die Abschaltsteuervorrichtung eingerichtet, um den Ladeparametergradient direkt zu erfassen, wobei der Ladeparametergradient mit dem vorbestimmten Gradienten-Schwellenwert verglichen wird. Auf eine Störung des Ladevorgangs wird geschlossen, wenn der erfasste Ladeparametergradient den vorbestimmten Gradienten-Schwellenwert überschreitet. Dabei wird das erste Leistungshalbleiter-Bauteil und/oder das zweite Leistungshalbleiter-Bauteil abgeschaltet und dadurch der Ladestrom unterbrochen. Alternativ ist vorgesehen, dass der Ladeparametergradient indirekt erfasst wird, indem ein für den Ladeparametergradient charakteristischer Messparameter gemessen wird, wobei der Messparameter mit einem vorbestimmten Messparameter-Schwellenwert verglichen wird, wobei auf eine Störung des Ladevorgangs geschlossen wird, wenn der Messparameter den vorbestimmten Messparameter-Schwellenwert überschreitet. Dabei wird auch hier das erste Leistungshalbleiter-Bauteil und/oder das zweite Leistungshalbleiter-Bauteil abgeschaltet und dadurch der Ladestrom unterbrochen.

In einer Ausführungsform ist die Abschaltsteuervorrichtung eingerichtet, um während eines Ladevorgangs Daten einer Datenübertragung zwischen der Leistungsversorgungsvorrichtung und der Energiespeichervorrichtung zu empfangen. Die Daten enthalten zumindest einen für den Ladevorgang charakteristischen Ladeparameter-Grenzwert. Abhängig von dem zumindest einen Ladeparameter-Grenzwert wird der Ladeparameter-Schwellenwert, insbesondere ein Ist-Ladeparameter-Schwellenwert, der Leistungsversorgungsvorrichtung für einen Ladeparameter gesetzt. Wenn der Ladeparameter den Ladeparameter-Schwellenwert, insbesondere den Ist-Ladeparameter-Schwellenwert, überschreitet, wird das erste Leistungshalbleiter-Bauteil und/oder das zweite Leistungshalbleiter-Bauteil abgeschaltet und dadurch der Ladestrom unterbrochen. Optional ist vorgesehen, dass der Ladeparameter-Schwellenwert gesetzt wird, indem abhängig von dem zumindest einen Ladeparameter-Grenzwert ein Soll-Ladeparameter-Schwellenwert der Leistungsversorgungsvorrichtung für den Ladeparameter bestimmt wird. Es wird geprüft, ob ein aktueller Ist-Wert des Ist-Ladeparameter-Schwellenwerts der Leistungsversorgungsvorrichtung gleich einem Soll-Wert des Soll-Ladeparameter-Schwellenwerts ist, insbesondere den gleichen Wert aufweist. Wenn der aktuelle Ist-Wert nicht gleich dem Soll-Wert ist, insbesondere nicht den gleichen Wert aufweist, wird der Ist-Ladeparameter-Schwellenwert angepasst, sodass ein neuer Ist-Wert des Ist-Ladeparameter-Schwellenwerts gleich dem Soll-Wert ist, insbesondere den gleichen Wert aufweist. Weiter optional ist vorgesehen, dass die Daten an einer Leitung, einem Ladekabel, das die Leistungsversorgungsvorrichtung mit der Energiespeichervorrichtung verbindet, einer Leistungselektronik, einer elektrischen Schnittstelle und/oder an einer Steuervorrichtung der Leistungsversorgungsvorrichtung erfasst werden.

Gemäß einer Weiterbildung der Erfindung ist vorgesehen, dass die Abschaltsteuervorrichtung eingerichtet ist, um den Ladeparameter-Schwellenwert variabel einzustellen. Damit ist es möglich, den Ladeparameter-Schwellenwert an die Ladevorrichtung, insbesondere die Leistungsversorgungsvorrichtung und/oder die Energiespeichervorrichtung, anzupassen und somit die Abschalteinrichtung vorteilhaftweise optimal einzustellen.

Besonders bevorzugt ist die Abschaltsteuervorrichtung eingerichtet, um den Ladeparameter-Schwellenwert basierend auf mindestens einem den Ladestrom begrenzenden Ladeparameter-Grenzwert variabel einzustellen. Vorteilhafterweise kann der mindestens eine Ladeparameter-Schwellenwert flexibel an verschiedene Energiespeichervorrichtungen angepasst werden. So kann der Ladeparameter-Schwellenwert beispielsweise bei einem elektrischen Kleinfahrzeug mit einer maximalen Stromstärke von 125 A - bei einer Spannung von 400 V ergibt dies eine Leistung von 50 kW - niedriger eingestellt werden, als bei einem elektrischen Nutzfahrzeug mit einer maximalen Stromstärke von 625 A - bei einer Spannung von 400 V ergibt dies eine Leistung von 250 kW. Somit können verschiedene Elektrofahrzeuge vor einer Beschädigung geschützt werden.

In einer Ausführungsform ist die Abschaltsteuervorrichtung eingerichtet ist, um mit einer Erfassungsvorrichtung wirkverbunden zu werden. Weiterhin ist die Abschaltsteuervorrichtung eingerichtet, um von der Erfassungsvorrichtung - direkt und/oder indirekt - erfasste Daten, insbesondere den mindestens einen Ladeparameter-Grenzwert, einer Datenübertragung zwischen der Leistungsversorgungsvorrichtung und der Energiespeichervorrichtung zu empfangen.

In einer Ausführungsform werden die Daten der Datenübertragung, die eine elektrische Leitung im Kleinspannungsnetz (eng: Powerline Communication (PLC)) und/oder ein serielles Bussystem (eng: Controller Area Network (CAN)) nutzt, erfasst und/oder empfangen. Insbesondere ist die Erfassungsvorrichtung eingerichtet, um Daten einer Datenübertragung, die eine elektrische Leitung im Kleinspannungsnetz (eng: Powerline Communication (PLC)) nutzt, und/oder Daten einer Datenübertragung, die ein serielles Bussystem (eng: Controller Area Network (CAN)) nutzt, zu empfangen. Insbesondere verläuft die elektrische Leitung von der Leistungsversorgungsvorrichtung zu der Energiespeichervorrichtung, insbesondere innerhalb eines Ladekabels. Dabei ist die elektrische Leitung insbesondere eine von dem Leistungsstromkreis verschiedene Leitung innerhalb des Ladekabels.

In einer weiteren Ausführungsform ist vorgesehen, dass die Abschalteinrichtung die Erfassungsvorrichtung zur Erfassung von mindestens einem für einen Ladestrom charakteristischen Ladeparameter-Grenzwert aufweist. Die Erfassungsvorrichtung ist mit der Abschaltsteuervorrichtung wirkverbunden und eingerichtet, um den mindestens einen Ladeparameter-Grenzwert an die Abschaltsteuervorrichtung zu übermitteln. Die Erfassungsvorrichtung kann vorteilhafterweise in einem Gehäuse der Abschalteinrichtung angeordnet sein. Insbesondere ist die Erfassungsvorrichtung dann derart mit der Abschaltsteuervorrichtung verbunden, um Daten der Datenübertragung direkt zu erfassen. Alternativ ist die Erfassungsvorrichtung außerhalb des Gehäuses angeordnet und mit dem Datenübertragungsweg verbunden, um Daten der Datenübertragung indirekt, beispielsweise induktiv, zu erfassen. Insbesondere kann die Erfassungsvorrichtung einfach um ein Ladekabel gelegt oder geklemmt oder anderweitig an dem Ladekabel befestigt werden.

Gemäß einer Weiterbildung der Erfindung ist vorgesehen, dass die Abschaltsteuervorrichtung eingerichtet ist, um als den mindestens einen Ladeparameter einen Parameter, ausgewählt aus einer Spannung, einer Stromstärke, einem Stromstärkegradient, einem Magnetfeld, einer Leistung, einer Energieflussrichtung und einer Temperatur, zu erfassen. Vorteilhafterweise ist es mittels des mindestens einen Ladeparameters möglich, auf eine Fehlfunktion zu schließen.

Insbesondere übersteigt ein Wert des Parameters bei einer Fehlfunktion, insbesondere bei einem Kurzschluss, den Ladeparameter-Schwellenwert.

In einer Ausgestaltung ist die Abschaltsteuervorrichtung eingerichtet ist, um eine Stromstärke als den mindestens einen Ladeparameter zu erfassen. Typischerweise unterbricht eine Schmelzsicherung den Ladestrom, wenn die Stromstärke des Ladestroms eine Nennstromstärke überschreitet und für eine Dauer der Überschreitung ein I²t-Wert der Schmelzsicherung überschritten wird. Dabei ist der I²t-Wert bei einer Schmelzsicherung so gewählt, dass die Dauer der Überschreitung mindestens im Millisekunden-Bereich ist, bevor der Ladestrom unterbrochen wird. Vorteilhafterweise ist es mittels der Abschalteinrichtung aufgrund der Erfassung der Stromstärke möglich, den Ladestrom bei einer Überschreitung der Nennstromstärke viel schneller als mit einer Schmelzsicherung zu unterbrechen. Vorzugsweise ist die Abschaltsteuervorrichtung zusätzlich eingerichtet, um das erste Leistungshalbleiter-Bauteil und/oder das zweite Leistungshalbleiter-Bauteil abzuschalten, wenn die erfasste Stromstärke einen Stromstärke-Schwellenwert als den Ladeparameter-Schwellenwert übersteigt, wobei als Stromstärke-Schwellenwert beispielsweise das 1,3-fache einer Nennstromstärke der Energiespeichervorrichtung gewählt wird. Dabei wird besonders bevorzugt die Nennstromstärke als Ladeparameter-Grenzwert, insbesondere als Stromstärke-Grenzwert, verwendet. Besonders bevorzugt weist die Abschalteinrichtung mindestens ein Stromstärke-Bauteil, ausgewählt aus einer Gruppe, bestehend aus einem Shunt, einem Hallsensor, einem Stromwandler, und einer Kombination von mindestens zwei der genannten Stromstärke-Bauteile, auf, wobei die Abschaltsteuervorrichtung eingerichtet ist, um basierend auf einem Signal des mindestens einen Stromstärke-Bauteils eine Stromstärke als den mindestens einen Ladeparameter zu ermitteln.

In einer weiteren Ausgestaltung ist die Abschaltsteuervorrichtung eingerichtet ist, um eine Spannung als den mindestens einen Ladeparameter zu erfassen. Dabei ist die Abschaltsteuervorrichtung insbesondere eingerichtet, um eine Spannung, die an einem direkt mit der Ladevorrichtung verbunden Anschluss der Abschalteinrichtung anliegt, zu erfassen. Vorzugsweise ist die Abschaltsteuervorrichtung zusätzlich eingerichtet, um das erste Leistungshalbleiter-Bauteil und/oder das zweite Leistungshalbleiter-Bauteil abzuschalten, wenn die erfasste Spannung einen Spannungs-Schwellenwert als den Ladeparameter-Schwellenwert übersteigt.

In einer weiteren Ausgestaltung ist die Abschaltsteuervorrichtung eingerichtet ist, um einen Stromstärkegradienten als den mindestens einen Ladeparameter zu erfassen. Vorzugsweise ist die Abschaltsteuervorrichtung zusätzlich eingerichtet, um das erste Leistungshalbleiter-Bauteil und/oder das zweite Leistungshalbleiter-Bauteil abzuschalten, wenn der erfasste Stromstärkegradient einen Stromstärkegradienten-Schwellenwert als den Ladeparameter-Schwellenwert übersteigt. Insbesondere liegt eine Reaktionszeit des Verfahrens im Mikrosekunden-Bereich. Insbesondere ist es nicht notwendig, dass eine Stromstärke den Stromstärke-Schwellenwert und/oder eine Spannung den Spannungs-Schwellenwert erreicht, bevor auf eine Störung des Ladevorgangs geschlossen werden kann. Es ist bereits ausreichend, wenn eine Stromstärkeänderungsgeschwindigkeit - der Stromstärkegradient - außerhalb eines vorbestimmten Bereichs oder über dem Stromstärkegradienten-Schwellenwert liegt, um eine Störung des Ladevorgangs zu erkennen. Damit ist es vorteilhafterweise nicht notwendig, eine Auslösecharakteristik und/oder einen Nennstrom einer Sicherung des Elektrofahrzeugs zu kennen. Insbesondere sind keine festen Abschaltschwellen der Ladevorrichtung, insbesondere der Leistungsversorgungsvorrichtung, notwendig. Mittels des Verfahrens können somit auch Energiespeichervorrichtungen vor einer Beschädigung geschützt werden, die Sicherungen mit unterschiedlichen Auslösecharakteristiken und/oder Nennströmen aufweisen, ohne dass diese Auslösecharakteristiken und/oder Nennströme der Ladevorrichtung, insbesondere der Leistungsversorgungsvorrichtung, bekannt sind. Vorteilhafterweise ist es damit möglich, den Ladestrom der elektrischen Leistungsversorgungsvorrichtung bei einer Fehlfunktion derselben zu unterbrechen, bevor eine Energiespeichervorrichtung die Fehlfunktion registriert und insbesondere eine Sicherung der Energiespeichervorrichtung ausgelöst wird. Besonders bevorzugt weist die Abschalteinrichtung mindestens ein Stromstärkegradienten-Bauteil, ausgewählt aus einer Gruppe, bestehend aus einer diskreten Induktivität, einem Transformator, einer Rogowskispule und einer Kombination von mindestens zwei der genannten Stromstärkegradienten-Bauteile, auf, wobei die Abschaltsteuervorrichtung eingerichtet ist, um basierend auf einem Signal des mindestens einen Stromstärkegradienten-Bauteils, insbesondere einem Spannungsabfall an dem Stromstärkegradienten-Bauteil, einen Stromstärkegradienten als den mindestens einen Ladeparameter zu ermitteln. Vorteilhafterweise ist es damit möglich, auch Kurzschlüsse mit hohen Stromstärkeanstiegsgeschwindigkeit schnell und effektiv zu detektieren und damit auch schnell den Ladestrom zu unterbrechen.

In einer Ausführungsform beträgt der Stromstärkegradient bei einer mit einem störungsfreien Ladevorgang betriebenen Ladevorrichtung, insbesondere Leistungsversorgungsvorrichtung, von 20 A/s bis 100 A/s. Bei einer mit einer kurzgeschlossenen Energiespeichervorrichtung betriebenen Leistungsversorgungsvorrichtung kann der Stromstärkegradient dagegen größer 1,5 A/µs betragen. Bei bisher durchgeführten Messungen wurde bei einem Kurzschluss ein Stromstärkegradient von bis zu 340 A/ µs gemessen. Ein Rippelstrom des Ladestroms kann einen Rippelstromgradienten von bis zu 20 A/µs aufweisen. Nach einer Glättung mittels einer Kapazität, insbesondere mittels eines Kondensators, kann der Rippelstromgradient des Rippelstroms bis zu 1 A/µs betragen. Der maximal nach der Norm IEC61851-23 in ihrer an dem für den Zeitrang der vorliegenden Anmeldung maßgeblichen Tag gültigen Fassung zulässige Rippelstromgradient kann 2,7 A/µs, insbesondere genormt auf eine Ladestromstärke von 9 A mit einer Frequenz des Rippelstroms von bis zu 150 kHz betragen. Der Rippelstrom ist insbesondere ein Wechselstrom beliebiger Frequenz und Kurvenform, der einem Gleichstrom, insbesondere dem Ladestrom, überlagert ist. Insbesondere ist der Ladestrom mit einem Rippelstrom überlagert, der eine Frequenz von 80 kHz bis 120 kHz, insbesondere 100 kHz aufweist.

In einer bevorzugten Ausführungsform ist die Abschaltsteuervorrichtung zusätzlich eingerichtet, um das erste Leistungshalbleiter-Bauteil und/oder das zweite Leistungshalbleiter-Bauteil abzuschalten, wenn der erfasste Stromstärkegradient den Stromstärkegradienten-Schwellenwert übersteigt. Insbesondere wird der Stromstärkegradienten-Schwellenwert derart gewählt, dass er in einem Intervall zwischen der zulässigen Stromstärkegradiente-Obergrenze des Rippelstroms und der Stromstärkegradienten-Obergrenze des Ladestroms liegt. Insbesondere beträgt der Stromstärkegradienten-Schwellenwert dann von 1 A/µs bis 340 A/µs, vorzugsweise von 1,5 A/µs bis 340 A/µs, besonders bevorzugt 1,3 A/µs.

In einer weiteren Ausgestaltung ist die Abschaltsteuervorrichtung eingerichtet ist, um einen Spannungsgradienten als den mindestens einen Ladeparameter zu erfassen. Dabei ist die Abschaltsteuervorrichtung insbesondere eingerichtet, um einen Spannungsgradienten, der an dem direkt mit Ladevorrichtung, insbesondere der Leistungsversorgungsvorrichtung, verbunden Anschluss der Abschalteinrichtung anliegt, zu erfassen. Vorzugsweise ist die Abschaltsteuervorrichtung zusätzlich eingerichtet ist, um das erste Leistungshalbleiter-Bauteil und/oder das zweite Leistungshalbleiter-Bauteil abzuschalten, wenn der erfasste Spannungsgradient einen Spannungsgradienten-Grenzwert als den Ladeparameter-Grenzwert übersteigt.

Insbesondere ist die Messvorrichtung eingerichtet ist, um die Leistung, die Stromstärke oder die Spannung direkt zu erfassen. Alternativ oder zusätzlich ist die Messvorrichtung eingerichtet, um den Stromstärkegradient indirekt - indem ein für den Stromstärkegradient charakteristischer Messparameter gemessen wird - zu erfassen.

In einer Ausführungsform - in der der Stromstärkegradient indirekt erfasst wird - ist vorgesehen, dass die Messvorrichtung eingerichtet ist, um als den Messparameter eine aufgrund einer Induktivität, insbesondere von elektronischen Bauteilen der Ladevorrichtung, insbesondere der Abschaltsteuervorrichtung der Ladevorrichtung, über einer - von dem Ladestrom oder einem von dem Ladestrom abhängigen Teilladestrom - durchflossenen Messstrecke abfallende Spannung zu erfassen. Die über der die Induktivität *L* aufweisenden Messstrecke abfallende Spannung *u(t)* ist unmittelbar abhängig von - insbesondere nach der Gleichung *u(t) = L·dI(t)*/*dt* proportional zu - dem zeitlichen Gradienten der Stromstärke des Ladestroms oder Teilladestroms *I(t)* und damit von dem Stromstärkegradient. In einer Ausführungsform ist die Messvorrichtung eingerichtet, um als den Messparameter eine über einer von dem Ladestrom oder Teilladestrom durchflossenen Spule abfallende Spannung zu erfassen. Alternativ weist die Messstrecke die Induktivität als eine parasitäre Induktivität auf. "Parasitär" bedeutet in diesem Zusammenhang insbesondere, dass ein Leitungsabschnitt oder mehrere unbestimmte, nicht klar umgrenzte Bauteile und/oder Leitungsabschnitte der Ladevorrichtung, insbesondere der Leistungsversorgungsvorrichtung und/oder der Energiespeichervorrichtung, für die Induktivität ursächlich sind.

Gemäß einer Weiterbildung der Erfindung ist vorgesehen, dass das erste Leistungshalbleiter-Bauteil einen ersten Halbleiter-Schalter und eine erste Bauteil-Diode aufweist, wobei der erste Halbleiter-Schalter und die erste Bauteil-Diode antiparallel angeordnet sind. Zusätzlich weist das zweite Leistungshalbleiter-Bauteil einen zweiten Halbleiter-Schalter und eine zweite Bauteil-Diode auf, wobei der zweite Halbleiter-Schalter und die zweite Bauteil-Diode antiparallel angeordnet sind. Damit wird erreicht, dass ein elektrischer Strom, welcher von dem Pluspol des Leistungshalbleiter-Bauteils zu dem Minuspol des Leistungshalbleiter-Bauteils fließt, durch den Halbleiter-Schalter geleitet wird, da die Bauteil-Diode in Sperrrichtung angeordnet ist. Weiterhin wird erreicht, dass ein elektrischer Strom, welcher von dem Minuspol des Leistungshalbleiter-Bauteils zu dem Pluspol des Leistungshalbleiter-Bauteils fließt, durch die Bauteil-Diode geleitet wird, da die Bauteil-Diode in Durchlassrichtung angeordnet ist. Darüber hinaus sind, aufgrund der anti seriellen Anordnung des ersten Leistungshalbleiter-Bauteils und des zweiten Leistungshalbleiter-Bauteils, der erste Halbleiter-Schalter und der zweite Halbleiter-Schalter ebenfalls antiseriell in der Abschalteinrichtung angeordnet. Vorteilhafterweise bilden damit der erste Halbleiter-Schalter und der zweite Halbleiter-Schalter einen bidirektionalen Halbleiter-Schalter. Weiterhin ist es mittels der Halbleiter-Schalter möglich, den Ladestrom mittels eines entsprechenden Gate-Signals schnell zu unterbrechen. Zusätzlich sind, aufgrund der antiseriellen Anordnung des ersten Leistungshalbleiter-Bauteils und des zweiten Leistungshalbleiter-Bauteils, die erste Bauteil-Diode und die zweite Bauteil-Diode ebenfalls antiseriell in der Abschaltanordnung angeordnet.

In einer ersten Ausgestaltung ist die Abschaltsteuervorrichtung eingerichtet, um in Abhängigkeit von einer ersten Halbleiter-Flussspannung des ersten Halbleiter-Schalters und dem Ladeparameter-Grenzwert ein erstes Überwachungssignal zu erzeugen. Zusätzlich ist die Abschaltsteuervorrichtung eingerichtet, um in Abhängigkeit von einer zweiten Halbleiter-Flussspannung des zweiten Halbleiter-Schalters und dem Ladeparameter-Grenzwert ein zweites Überwachungssignal zu erzeugen. Weiterhin ist die Abschaltsteuervorrichtung eingerichtet, um in Abhängigkeit von dem ersten Überwachungssignal und dem zweiten Überwachungssignal ein Abschaltsignal zur Unterbrechung des Ladestroms zu erzeugen. Insbesondere werden das erste Überwachungssignal und das zweite Überwachungssignal mittels einer Oder-Verknüpfung miteinander kombiniert, sodass das Abschaltsignal erzeugt wird, wenn das erste Überwachungssignal und/oder das zweite Überwachungssignal auf eine Fehlfunktion hindeutet.

In einer zweiten Ausgestaltung ist die Abschaltsteuervorrichtung eingerichtet, um die erste Halbleiter-Flussspannung des ersten Halbleiter-Schalters, die zweite Halbleiter-Flussspannung des zweiten Halbleiter-Schalters, eine erste Bauteil-Dioden-Flussspannung der ersten Bauteil-Diode und eine zweite Bauteil-Dioden-Flussspannung der zweiten Bauteil-Diode zu erfassen. Zusätzlich ist die Abschaltsteuervorrichtung eingerichtet, um in Abhängigkeit von der ersten Halbleiter-Flussspannung, der zweiten Halbleiter-Flussspannung, der ersten Bauteil-Dioden-Flussspannung und der zweiten Bauteil-Dioden-Flussspannung ein Überwachungssignal zu erzeugen. Weiterhin ist die Abschaltsteuervorrichtung eingerichtet, um in Abhängigkeit von dem Überwachungssignal und dem Ladeparameter-Grenzwert das Abschaltsignal zur Unterbrechung des Ladestroms zu erzeugen.

In einer Ausgestaltung ist der erste Halbleiter-Schalter und/oder der zweite Halbleiter-Schalter als Feldeffekttransistor ausgebildet, insbesondere als Metall-Oxid-Halbleiter-Feldeffekttransistor (MOSFET). Insbesondere weist der Metall-Oxid-Halbleiter-Feldeffekttransistor einen Siliziumkarbid-Werkstoff auf. Wird ein n-Kanal Feldeffekttransistor verwendet, ist ein Drain-Anschluss des Feldeffekttransistors dem Pluspol des Leistungshalbleiter-Bauteils zugeordnet und ein Source-Anschluss des Feldeffekttransistors ist dem Minuspol des Leistungshalbleiter-Bauteils zugeordnet. Wird alternativ ein p-Kanal Feldeffekttransistor verwendet, ist der Source-Anschluss des Feldeffekttransistors dem Pluspol des Leistungshalbleiter-Bauteils zugeordnet und der Drain-Anschluss des Feldeffekttransistors ist dem Minuspol des Leistungshalbleiter-Bauteils zugeordnet. Besonders bevorzugt ist die Abschaltsteuervorrichtung eingerichtet, um die Halbleiter-Flussspannung, insbesondere eine Gate-Source-Spannung des Feldeffekttransistors, zu erfassen und daraus eine Stromstärke und/oder eine Spannung als den mindestens einen Ladeparameter zu ermitteln.

In einer weiteren Ausgestaltung ist der erste Halbleiter-Schalter und/oder der zweite Halbleiter-Schalter als Bipolartransistor mit isolierter Gate-Elektrode ausgebildet. Wird ein n-Kanal Bipolartransistor verwendet, ist ein Kollektor-Anschluss des Bipolartransistors dem Pluspol des Leistungshalbleiter-Bauteils zugeordnet und ein Emitter-Anschluss des Bipolartransistors ist dem Minuspol des Leistungshalbleiter-Bauteils zugeordnet. Wird alternativ ein p-Kanal Bipolartransistor verwendet, ist der Emitter-Anschluss des Bipolartransistors dem Pluspol des Leistungshalbleiter-Bauteils zugeordnet und der Kollektor-Anschluss des Bipolartransistors ist dem Minuspol des Leistungshalbleiter-Bauteils zugeordnet. Besonders bevorzugt ist die Abschaltsteuervorrichtung eingerichtet, um die Halbleiter-Flussspannung, insbesondere eine Basis-Emitter-Spannung des Bipolartransistors, zu erfassen und daraus eine Stromstärke und/oder eine Spannung als den mindestens einen Ladeparameter zu ermitteln.

In einer Ausführungsform ist der erste Halbleiter-Schalter und/oder der zweite Halbleiter-Schalter ein Bipolartransistor mit isolierter Gate-Elektrode (englisch: Insulated-Gate Bipolar Transistor; IGBT). Insbesondere weist dieser einen Silizium-Werkstoff auf. Insbesondere ist es damit möglich, den Ladestrom derart schnell zu unterbrechen, dass ein bei der Fehlfunktion auftretender Kurzschlussstrom einen Wert von I = 1 kA nicht überschreitet.

In einer Ausgestaltung ist eine Kathode der Bauteil-Diode des Leistungshalbleiter-Bauteils dem Pluspol des Leistungshalbleiter-Bauteils zugeordnet und eine Anode der Bauteil-Diode des Leistungshalbleiter-Bauteils ist dem Minuspol des Leistungshalbleiter-Bauteils zugeordnet.

In einer besonders bevorzugten Ausgestaltung sind das erste des Leistungshalbleiter-Bauteil und das zweite des Leistungshalbleiter-Bauteil identisch ausgebildet.

Gemäß einer Weiterbildung der Erfindung ist vorgesehen, dass die Abschaltsteuervorrichtung eingerichtet ist, um das erste Leistungshalbleiter-Bauteil und/oder das zweite Leistungshalbleiter-Bauteil mittels der Steuerspannung abzuschalten.

Insbesondere beträgt die Steuerspannung zum Abschalten des ersten Leistungshalbleiter-Bauteils und/oder des zweiten Leistungshalbleiter-Bauteils vorzugsweise höchstens 0 V. Insbesondere ist das erste Leistungshalbleiter-Bauteil abgeschaltet und somit der Ladestrom unterbrochen, wenn an dem ersten Leistungshalbleiter-Bauteil, insbesondere an einem Gate-Anschluss des ersten Leistungshalbleiter-Bauteils, eine Steuerspannung mit höchstens 0 V anliegt. Weiterhin ist das zweite Leistungshalbleiter-Bauteil abgeschaltet und somit der Ladestrom unterbrochen, wenn an dem zweiten Leistungshalbleiter-Bauteil, insbesondere an einem Gate-Anschluss des zweiten Leistungshalbleiter-Bauteils, eine Steuerspannung mit höchstens 0 V anliegt. Insbesondere sind das erste Leistungshalbleiter-Bauteil und das zweite Leistungshalbleiter-Bauteil eingeschaltet und somit der Ladestrom nicht unterbrochen, wenn an dem ersten Leistungshalbleiter-Bauteil und an dem zweiten Leistungshalbleiter-Bauteil, insbesondere an den jeweiligen Gate-Anschlüssen, jeweils eine Steuerspannung von 15 V bis 20 V anliegt.

Gemäß einer Weiterbildung der Erfindung weist die Abschalteinrichtung eine Temperiervorrichtung auf. Die Temperiervorrichtung ist eingerichtet, um das erste Leistungshalbleiter-Bauteil und/oder das zweite Leistungshalbleiter-Bauteil zu temperieren.

Insbesondere ist die Temperiervorrichtung eingerichtet, um das erste Leistungshalbleiter-Bauteil und/oder das zweite Leistungshalbleiter-Bauteil zu kühlen oder zu heizen. Insbesondere ist es möglich, dass sich das erste Leistungshalbleiter-Bauteil und/oder das zweite Leistungshalbleiter-Bauteil während einer Benutzung der Ladevorrichtung aufgrund von hohen Strömen des Ladestroms stark erhitzt. Mittels der Temperiervorrichtung kann das Leistungshalbleiter-Bauteil gekühlt werden, um einen sicheren Betrieb der Abschalteinrichtung zu gewährleisten.

Alternativ oder zusätzlich kann das erste Leistungshalbleiter-Bauteil und/oder das zweite Leistungshalbleiter-Bauteil mittels des Temperiervorrichtung vorgewärmt werden, um eine zu rasche Aufheizung im Betrieb und damit mechanischen Belastungen des ersten Leistungshalbleiter-Bauteils und/oder des zweiten Leistungshalbleiter-Bauteils insbesondere aufgrund von Wärmeausdehnung zu verhindern.

In einer Ausgestaltung weist die Temperiervorrichtung eine Kühlvorrichtung und/oder eine Heizvorrichtung auf. Dabei ist die Kühlvorrichtung vorzugsweise als Wasserkühlung oder als Luftkühlung ausgebildet. Weiterhin ist die Heizvorrichtung vorzugsweise als resistives Heizelement ausgebildet.

Gemäß einer Weiterbildung der Erfindung ist vorgesehen, dass die Abschalteinrichtung eine Temperatursteuervorrichtung aufweist. Die Temperatursteuervorrichtung ist eingerichtet, um eine Temperatur der Abschalteinrichtung zu erfassen. Alternativ oder zusätzlich ist die Temperatursteuervorrichtung eingerichtet, um eine Temperatur der Abschalteinrichtung zu steuern, insbesondere zu regeln.

Vorteilhafterweise ist es damit in einer einfachen Ausgestaltung möglich, eine momentane Temperatur der Abschalteinrichtung zu überwachen. Vorteilhaft ist es in einer komplexeren Ausgestaltung möglich eine insbesondere vorbestimmte Temperatur der Abschalteinrichtung einzustellen. Weiterhin ist es vorteilhafterweise möglich, die Temperatur der Abschalteinrichtung zu regulieren und insbesondere bei der insbesondere vorbestimmten Temperatur zu halten.

Bevorzugt kann die Temperatursteuervorrichtung eingerichtet sein, um eine Temperatursteuerung und/oder eine insbesondere intelligente Temperaturregelung durchzuführen. Alternativ oder zusätzlich kann die Temperatursteuervorrichtung eingerichtet sein, um die Temperatur der Abschalteinrichtung, insbesondere während einer Benutzung der Ladevorrichtung, innerhalb eines vorbestimmten Betriebstemperatur-Intervalls zu halten.

In einer besonders bevorzugten Ausgestaltung weist die Abschalteinrichtung die Temperiervorrichtung und die Temperatursteuervorrichtung auf. Insbesondere sind die Temperatursteuervorrichtung und die Temperiervorrichtung wirkverbunden, wobei die Temperatursteuervorrichtung eingerichtet ist, um die Temperiervorrichtung anzusteuern und damit die Temperatur der Abschalteinrichtung zu steuern, insbesondere zu regeln.

Gemäß einer Weiterbildung der Erfindung ist vorgesehen, dass die Abschalteinrichtung eine Kommunikationsschnittstelle aufweist. Die Kommunikationsschnittstelle ist eingerichtet, um Informationen zu empfangen. Alternativ oder zusätzlich ist die Kommunikationsschnittstelle eingerichtet, um Informationen zu versenden.

In einer Ausgestaltung ist die Abschalteinrichtung, insbesondere die Abschaltsteuervorrichtung und/oder die Kommunikationsschnittstelle, eingerichtet, um während eines Ladevorgangs Daten einer Datenübertragung zwischen der Leistungsversorgungsvorrichtung und der Energiespeichervorrichtung zu empfangen. Die Daten enthalten zumindest einen für den Ladestroms charakteristischen Ladeparameter-Grenzwert. Abhängig von dem zumindest einen Ladeparameter-Grenzwert wird ein Ladeparameter-Schwellenwert der Leistungsversorgungsvorrichtung für einen Ladeparameter gesetzt. Wenn der erfasste Wert des Ladeparameters den Ladeparameter-Schwellenwert überschreitet, wird der Ladestrom unterbrochen, insbesondere um die Leistungsversorgungsvorrichtung und/oder die Energiespeichervorrichtung vor einer Beschädigung zu schützen.

Vorteilhafterweise kann mit dem Verfahren eine Kommunikation zwischen der Energiespeichervorrichtung und der Leistungsversorgungsvorrichtung erfasst und genutzt werden, um das Auslösemerkmal - den Ladeparameter-Schwellenwert - der Unterbrechung des Ladestrom flexibel an die jeweilige Energiespeichervorrichtung, insbesondere an deren Ladeparameter-Grenzwert, beispielsweise eine maximale Stromstärke des Ladestroms, anzupassen. Damit ist es möglich, den Leistungsstromkreis der elektrischen Leistungsversorgungsvorrichtung bei einer Fehlfunktion derselben zu unterbrechen, bevor eine Energiespeichervorrichtung die Fehlfunktion registriert und insbesondere eine Sicherung der Energiespeichervorrichtung ausgelöst wird. Mittels des variabel angepassten Ladeparameter-Schwellenwerts kann zeitlich früher der Ladestrom unterbrochen werden als mittels einer für viele Energiespeichervorrichtungen verwendeten festen Abschaltschwelle der Leistungsversorgungsvorrichtung. Beispielsweise kann der Ladeparameter-Schwellenwert an den Ladeparameter-Grenzwert, beispielsweise an die maximale Stromstärke des Ladestroms, von verschiedensten Elektrofahrzeugen - vom Kleinwagen bis zum Lastkraftwagen - angepasst werden. Dabei kann verhindert werden, dass die Sicherung eines Kleinwagens durchbrennt. Der Leistungsversorgungsvorrichtung ist zwar nicht bekannt, dass ein Kleinwagen geladen wird, jedoch ist der Leistungsversorgungsvorrichtung ein Ladeparameter-Grenzwert, beispielsweise eine maximale Stromstärke des Ladestroms, bekannt. Weiter ist es vorteilhafterweise nicht notwendig, eine Auslösecharakteristik und/oder einen Nennstrom einer Sicherung des Elektrofahrzeugs zu kennen, sodass mittels der Abschalteinrichtung auch Energiespeichervorrichtungen vor einer Beschädigung geschützt werden, die Sicherungen mit unterschiedlichen Auslösecharakteristiken und/oder Nennströmen aufweisen. Ebenfalls werden kritische Kurzschlüsse mit einer hohen Stromstärkeanstiegsgeschwindigkeit - also einem vergleichsweise hohen Stromstärkegradienten - verhindert, indem der Leistungsstromkreis bereits bei einer noch zulässigen Stromstärke bezogen auf die gerade angeschlossene Energiespeichervorrichtung unterbrochen und somit der Ladevorgang beendet wird. Weiter ist es möglich, einen vergleichsweise kleinen Abstand zwischen einer einen störungsfreien Ladevorgang charakterisierenden Stromstärke und dem Ladeparameter-Schwellenwert zu realisieren. Der Ladeparameter-Schwellenwert wird bevorzugt zu Beginn eines Ladevorgangs gesetzt, kann aber auch optional während des Ladevorgangs, insbesondere ein oder mehrmals, insbesondere zyklisch, erneut gesetzt und somit dynamisch angepasst werden.

Gemäß einer Weiterbildung der Erfindung ist vorgesehen, dass die Kommunikationsschnittstelle eingerichtet ist, um Informationen über einen Betriebszustand der Abschalteinrichtung zu versenden. Alternativ oder zusätzlich ist die Kommunikationsschnittstelle eingerichtet, um Informationen einer Recheneinheit insbesondere der Ladevorrichtung zu empfangen.

Insbesondere ist die Kommunikationsschnittstelle eingerichtet, um Informationen drahtlos zu versenden und/oder zu empfangen.

Insbesondere geben die Informationen über den Betriebszustand der Abschalteinrichtung an, ob das das erste Leistungshalbleiter-Bauteil und/oder das zweite Leistungshalbleiter-Bauteil an- oder abgeschaltet ist.

Weiterhin werden die Informationen über den Betriebszustand insbesondere an ein Rechenzentrum und/oder eine Überwachungseinheit versendet. Damit ist es vorteilhaft möglich, einen Betriebszustand der Abschalteinrichtung unabhängig von einer Nähe zu der Abschalteinrichtung zu überwachen.

Insbesondere ist die Kommunikationsschnittstelle eingerichtet, um Informationen zu einer mit der Leistungsversorgungsvorrichtung verbundenen Energiespeichervorrichtung von der Recheneinheit der Leistungsversorgungsvorrichtung zu empfangen.

In einer bevorzugten Ausgestaltung ist die Kommunikationsschnittstelle eingerichtet, um Informationen, insbesondere den Ladeparameter-Grenzwert, zu einer mit der Leistungsversorgungsvorrichtung verbundenen Energiespeichervorrichtung von einer Erfassungsvorrichtung, insbesondere der zuvor bereits beschriebenen Erfassungsvorrichtung, zu empfangen.

Insbesondere ist die Abschaltsteuervorrichtung eingerichtet, um basierend auf den empfangenen Informationen die Auswertung des erfassten Werts des Ladeparameters, insbesondere den Ladeparameter-Grenzwert, einzustellen und/oder zu variieren und/oder anzupassen. Dies ermöglicht vorteilhaft insbesondere eine Anpassung an verschiedene Ladegeschwindigkeiten oder Ladeleistungen der mit der Leistungsversorgungsvorrichtung verbundenen Energiespeichervorrichtung. Kann beispielsweise ein erstes Elektrofahrzeug mit 100 kW geladen werden, kann die Auswertung des erfassten Werts empfindlicher eingestellt werden, insbesondere kann der Ladeparameter-Grenzwert niedriger gewählt werden, als bei einem zweiten Elektrofahrzeug, das mit 170 kW geladen werden kann. Dies vermeidet vorteilhaft zum einen Fehl-Auslösungen bei Energiespeichervorrichtungen mit höherer Ladeleistung und zum anderen trotz Fehlerfall unterbleibende Auslösungen bei Energiespeichervorrichtungen mit geringerer Ladeleistung.

Insbesondere ist die Abschaltsteuervorrichtung eingerichtet, um basierend auf den empfangenen Informationen die Auswertung des erfassten Werts des Ladeparameters, insbesondere den Ladeparameter-Grenzwert, dynamisch an eine Ladekurve der mit der Leistungsversorgungsvorrichtung verbundenen Energiespeichervorrichtung anzupassen. Typischerweise ist die Ladeleistung insbesondere beim Laden von Elektrofahrzeugen im Verlauf des Ladevorgangs nicht konstant, sondern nimmt vielmehr mit zunehmendem Füllstand der Fahrzeugbatterie - je nach Elektrofahrzeug auf verschiedene Weise - ab. Vorteilhaft kann so die Empfindlichkeit der Abschalteinrichtung an die individuelle Ladekurve der jeweiligen Energiespeichervorrichtung angepasst werden, sodass Fehl-Auslösungen und trotz Fehlerfall unterbleibende Auslösungen vermieden werden können.

Gemäß einer Weiterbildung der Erfindung ist vorgesehen, dass die Abschalteinrichtung eine Hilfsspannungsversorgung aufweist. Die Hilfsspannungsversorgung ist eingerichtet, um die Abschaltsteuervorrichtung, das erste Leistungshalbleiter-Bauteil und das zweite Leistungshalbleiter-Bauteil zu betreiben. Vorteilhafterweise wird die Abschalteinrichtung damit unabhängig von einer Spannungsversorgung mittels der Ladevorrichtung betrieben, sodass der Ladestrom auch bei einer Störung der Ladevorrichtung unterbrochen werden kann.

Die Aufgabe wird auch gelöst, indem eine Leistungsversorgungsvorrichtung mit einer erfindungsgemäßen Abschalteinrichtung oder einer Abschalteinrichtung nach einer oder mehreren der zuvor erläuterten Ausführungsformen geschaffen wird. Eine Abschaltanordnung der Abschalteinrichtung, insbesondere das erste Leistungshalbleiter-Bauteil und das zweite Leistungshalbleiter-Bauteil, ist elektrisch in Reihe mit einer an die Leistungsversorgungsvorrichtung anschließbaren Energiespeichervorrichtung in einem Versorgungsstromkreis der Leistungsversorgungsvorrichtung eingebaut. In Zusammenhang mit der Leistungsversorgungsvorrichtung ergeben sich insbesondere die Vorteile, die bereits in Zusammenhang mit der Abschalteinrichtung erläutert wurden.

Gemäß einer Weiterbildung der Erfindung ist vorgesehen, dass die Leistungsversorgungsvorrichtung eine Recheneinheit aufweist. Die Recheneinheit ist mit der Abschalteinrichtung wirkverbunden. Zudem ist die Recheneinheit eingerichtet, um Daten von der Abschalteinrichtung zu empfangen. Alternativ oder zusätzlich ist die Recheneinheit eingerichtet, um Daten an die Abschalteinrichtung zu senden.

Insbesondere ist die Recheneinheit eingerichtet, um Daten von der mit der Leistungsversorgungsvorrichtung verbundenen Energiespeichervorrichtung zu empfangen. Insbesondere umfassen die Daten Informationen zu einer maximalen Ladestromstärke und/oder zu einer maximalen Ladespannung und/oder eine Ladeleistungs-Akkustand-Kennlinie - auch als Ladekurve bezeichnet. Insbesondere ist die Abschaltsteuervorrichtung eingerichtet, um basierend auf der maximalen Ladestromstärke und/oder der maximalen Ladespannung und/oder der Ladeleistungs-Akkustand-Kennlinie die Auswertung des erfassten Werts des Ladeparameters, insbesondere den Ladeparameter-Grenzwert, insbesondere in Abhängigkeit des Akkustands einzustellen und/oder zu variieren und/oder anzupassen.

Gemäß einer Weiterbildung der Erfindung ist vorgesehen, dass die Leistungsversorgungsvorrichtung zusätzlich ein Vorrichtungsenergiespeicher, ein Ladekabel und einen Ladestecker aufweist.

In einer Ausgestaltung ist die Abschalteinrichtung in dem Vorrichtungsenergiespeicher angeordnet. Vorteilhafterweise ist die Abschalteinrichtung in dem Vorrichtungsenergiespeicher in einfacher Weise in den Versorgungsstromkreis und/oder einen Kühlkreislauf integrierbar. Weiterhin ist die Integration unabhängig von einem Standort der Leistungsversorgungsvorrichtung und/oder Umweltbedingungen an dem Standort der Leistungsversorgungsvorrichtung.

In einer weiteren Ausgestaltung ist die Abschalteinrichtung alternativ oder zusätzlich in dem Ladekabel angeordnet. Vorteilhafterweise ist die Abschalteinrichtung unabhängig von der Leistungsversorgungsvorrichtung und kann auch bei bereits bestehenden Leistungsversorgungsvorrichtung nachgerüstet werden.

In einer weiteren Ausgestaltung ist die Abschalteinrichtung alternativ oder zusätzlich in dem Ladestecker angeordnet. Vorteilhafterweise ist die Abschalteinrichtung unabhängig von der Leistungsversorgungsvorrichtung und kann auch bei bereits bestehenden Leistungsversorgungsvorrichtung nachgerüstet werden. Darüber hinaus wird damit eine komplette Leitungsstrecke von dem Vorrichtungsenergiespeicher über das Ladekabel bis zu dem Ladestecker mittels der Abschalteinrichtung überwacht. Weiterhin ist bei gekühlten Ladekabeln eine gute Abführung einer Verlustenergie möglich.

Insbesondere ist ein Schutz der Energiespeichervorrichtung insbesondere vor Kurzschlüssen besser, je näher die Abschalteinrichtung an der Energiespeichervorrichtung angeordnet ist.

Besonders bevorzugt ist der Vorrichtungsenergiespeicher ein Bestandteil eines Basiselements der Leistungsversorgungsvorrichtung. Weiterhin weist das Basiselement eine Recheneinheit und eine Elektronik zur Bereitstellung der elektrischen Leistung auf. Dabei ist die Recheneinheit vorzugsweise mit der Abschalteinrichtung, insbesondere der Abschaltsteuervorrichtung, verbunden. Insbesondere ist eine Kommunikation der Recheneinheit der elektrischen Leistungsversorgungsvorrichtung mit der Abschalteinrichtung einfacher realisierbar, wenn die Abschalteinrichtung in dem Basiselement der elektrischen Leistungsversorgungsvorrichtung angeordnet ist.

In einer Ausgestaltung - insbesondere, wenn die Leistungsversorgungsvorrichtung keine Ladesäule aufweist - weist das Basiselement eine Bedienoberfläche auf, wobei ein Benutzer der Leistungsversorgungsvorrichtung über die Bedienoberfläche einen Ladevorgang starten, überwachen und beenden kann. Zusätzlich ist es insbesondere möglich, den Ladestecker bei einer Nichtbenutzung der Leistungsversorgungsvorrichtung an dem Basiselement zu verstauen.

Gemäß einer Weiterbildung der Erfindung ist vorgesehen, dass die Leistungsversorgungsvorrichtung eine Ladesäule aufweist. Die Ladesäule ist elektrisch zwischen dem Vorrichtungsenergiespeicher und dem Ladestecker angeordnet. Ein erstes Teilladekabel verbindet das Vorrichtungsenergiespeicher mit der Ladesäule und ein zweites Teilladekabel verbindet die Ladesäule mit dem Ladestecker. Darüber hinaus ist die Abschalteinrichtung in der Ladesäule angeordnet. Vorteilhafterweise kann die Abschalteinrichtung auch bei bereits bestehenden Leistungsversorgungsvorrichtung nachgerüstet werden. Insbesondere schützt die Abschalteinrichtung in der Ladesäule vor Kurzschlüssen in dem Ladekabel, falls das erste Teillade-Kabel eine große Distanz zwischen Vorrichtungsenergiespeicher und Ladesäule überbrückt.

Im Kontext der vorliegenden technischen Lehre ist eine Ladesäule insbesondere ein für einen Benutzer der Leistungsversorgungsvorrichtung bedienbarer Teil der Leistungsversorgungsvorrichtung. Dabei weist die Ladesäule insbesondere eine Ladestecker-Aufnahme und die Bedienoberfläche auf. Weiterhin ist es möglich, dass die Ladesäule und der Vorrichtungsenergiespeicher einen räumlichen Abstand von bis zu 300 m aufweisen. Alternativ können die Ladesäule und der Vorrichtungsenergiespeicher aber auch integriert ausgebildet sein.

Gemäß einer Weiterbildung der Erfindung ist vorgesehen, dass die Leistungsversorgungsvorrichtung eine Verkleidung aufweist, wobei die Verkleidung eine Wartungsklappe aufweist. Die Abschalteinrichtung ist derart in der Leistungsversorgungsvorrichtung angeordnet, dass zumindest das erste Leistungshalbleiter-Bauteil und/oder das zweite Leistungshalbleiter-Bauteil über die Wartungsklappe ausgetauscht werden kann. Damit ist es vorteilhaft möglich, das erste Leistungshalbleiter-Bauteil und/oder das zweite Leistungshalbleiter-Bauteil bei einem Defekt einfach und schnell auszutauschen.

In einer Ausgestaltung ist die Verkleidung ein Gehäuse des Vorrichtungsenergiespeichers. Alternativ oder zusätzlich ist die Verkleidung ein Gehäuse des Ladesteckers. Alternativ oder zusätzlich ist die Verkleidung ein Gehäuse der Ladesäule.

Gemäß einer Weiterbildung der Erfindung ist vorgesehen, dass die Leistungsversorgungsvorrichtung als Ladestation zum elektrischen Laden einer an die Leistungsversorgungsvorrichtung angeschlossenen Energiespeichervorrichtung ausgebildet ist.

Insbesondere ist die Leistungsversorgungsvorrichtung als eine Ladestation für Elektrofahrzeuge ausgebildet.

Als Ladestation wird in der Elektrotechnik jedwede, insbesondere stationäre oder mobile, Vorrichtung oder elektrische Anlage bezeichnet, welche dazu dient, mobilen akkubetriebenen Geräten, Maschinen oder Elektrofahrzeugen durch einfaches Einstellen oder Einstecken Energie zuzuführen, ohne eine Energiespeichervorrichtung - etwa die Traktionsbatterie eines Elektroautos - zwangsläufig entnehmen zu müssen. Ladestationen für Elektroautos werden mitunter auch als "Stromtankstellen" bezeichnet und können mehrere Ladepunkte umfassen. Bekannt sind hier insbesondere Gleichstrom-Schnellladesysteme (high performance charging systems oder high power charging systems, HPC-Systeme) wie das in Europa verbreitete, sogenannte kombinierte Ladesystem (combined charging system, CCS). Beim gattungsmäßigen Gleichstromladen wird Gleichstrom aus der Ladestation direkt in die Batterie des Fahrzeugs eingespeist und hierzu durch einen leistungsstarken Gleichrichter, bevorzugt der Ladestation, vom Stromnetz oder durch große Pufferakkumulatoren an z.B. Solartankstellen bereitgestellt. Im Fahrzeug befindet sich ein Batteriemanagementsystem, das mit der Ladestation direkt oder indirekt kommuniziert, um die Stromstärke und -spannung anzupassen oder bei Erreichung einer vorbestimmten Kapazitätsgrenze den Vorgang zu beenden. Eine Leistungselektronik befindet sich hierbei üblicherweise in der Ladestation. Da die Gleichstromanschlüsse der Ladestation direkt - ohne Umweg über einen AC/DC-Wandler des Fahrzeugs - mit entsprechenden Anschlüssen der Traktionsbatterie verbunden werden, lassen sich verlustarm hohe Ladeströme übertragen, was kurze Ladezeiten ermöglicht.

In einer Ausführungsform weist die Ladestation mindestens einen Ladepunkt, insbesondere genau einen Ladepunkt oder genau zwei Ladepunkte, auf.

Insbesondere ist die Ladestation als Schnellladestation ausgebildet. In einer Ausführungsform ist die Ladestation als batteriegestützte Ladestation, insbesondere als batteriegestützte Schnellladestation, ausgebildet.

Die Aufgabe wird auch gelöst, indem eine Energiespeichervorrichtung mit einer erfindungsgemäßen Abschalteinrichtung oder einer Abschalteinrichtung nach einer oder mehreren der zuvor erläuterten Ausführungsformen geschaffen wird. Eine Abschaltanordnung der Abschalteinrichtung, insbesondere das erste Leistungshalbleiter-Bauteil und das zweite Leistungshalbleiter-Bauteil, ist elektrisch in Reihe mit einer an die Energiespeichervorrichtung anschließbaren Leistungsversorgungsvorrichtung in einem Versorgungsstromkreis der Energiespeichervorrichtung eingebaut. In Zusammenhang mit der Energiespeichervorrichtung sich insbesondere die Vorteile, die bereits in Zusammenhang mit der Abschalteinrichtung erläutert wurden.

In einer Ausgestaltung ist die Energiespeichervorrichtung als Elektrofahrzeug ausgebildet.

Besonders bevorzugt ist die Abschalteinrichtung in eine Ladesteckdose der Energiespeichervorrichtung, insbesondere des Elektrofahrzeugs, integriert.

Die Erfindung wird im Folgenden anhand der Zeichnung näher erläutert. Dabei zeigen:
- Fig. 1: eine schematische Darstellung eines ersten Ausführungsbeispiels einer Abschalteinrichtung,
- Fig. 2: eine schematische Darstellung eines zweiten Ausführungsbeispiels der Abschalteinrichtung,
- Fig. 3: eine schematische Darstellung eines ersten Ausführungsbeispiels eines Leistungshalbleiter-Bauteils,
- Fig. 4: eine schematische Darstellung eines zweiten Ausführungsbeispiels des Leistungshalbleiter-Bauteils,
- Fig. 5: eine schematische Darstellung eines ersten Ausführungsbeispiels einer Leistungsversorgungsvorrichtung,
- Fig. 6: eine schematische Darstellung eines zweiten Ausführungsbeispiels der Leistungsversorgungsvorrichtung, und
- Fig. 7: eine schematische Darstellung eines Ausführungsbeispiels einer Energiespeichervorrichtung.

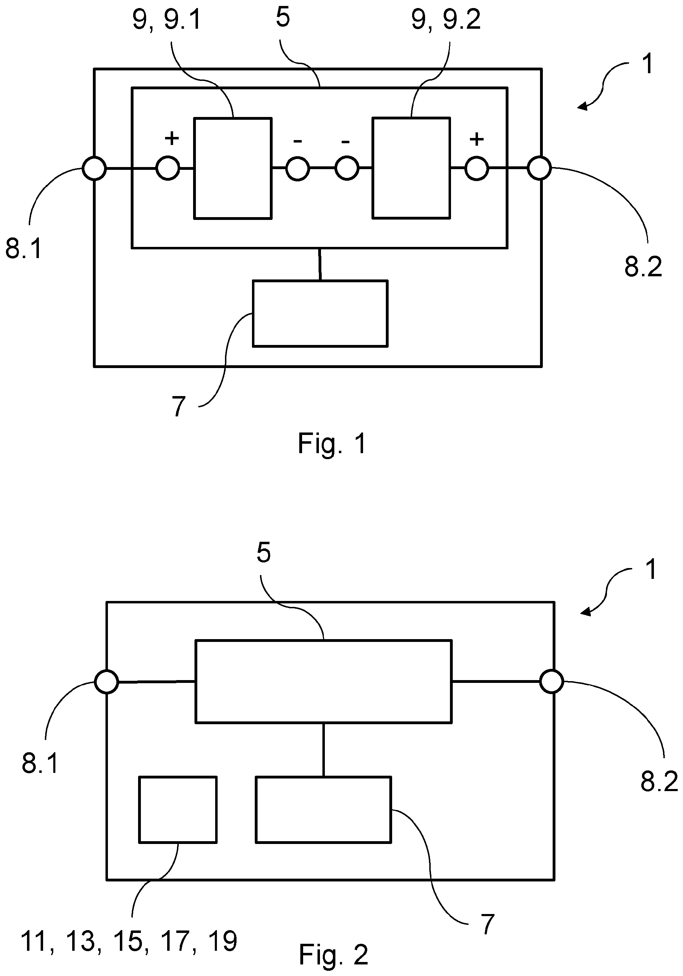

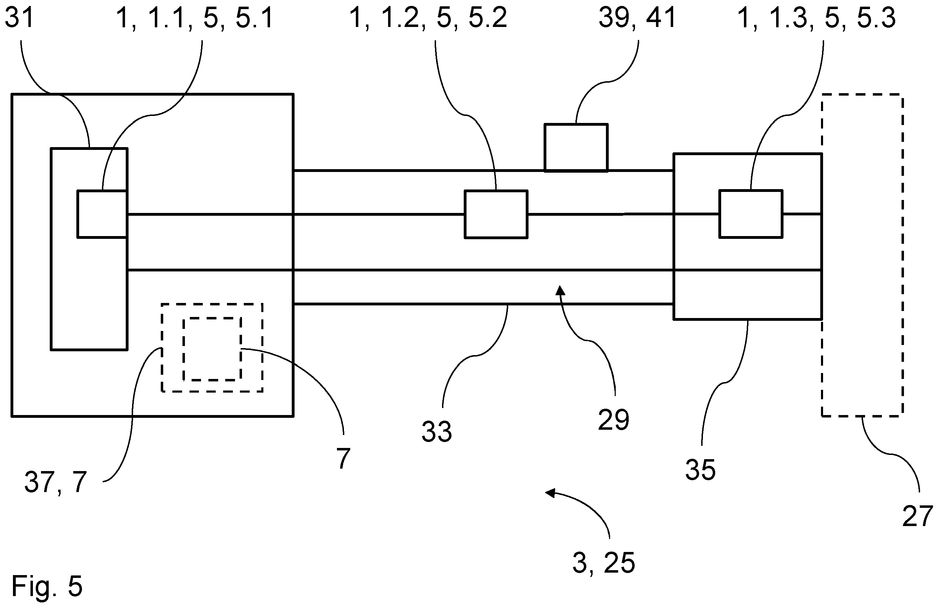

**Figur** 1 zeigt eine schematische Darstellung eines ersten Ausführungsbeispiels einer Abschalteinrichtung 1 für eine Ladevorrichtung 3, die insbesondere in den Figur 5 bis 7 dargestellt ist.

Die Abschalteinrichtung 1 weist eine Abschaltanordnung 5 und eine Abschaltsteuervorrichtung 7 auf. Dabei weist die Abschaltanordnung 5 ein erstes ansteuerbares Leistungshalbleiter-Bauteil 9.1 und ein zweites ansteuerbares Leistungshalbleiter-Bauteil 9.2 auf. Das erste Leistungshalbleiter-Bauteil 9.1 und das zweite Leistungshalbleiter-Bauteil 9.2 sind antiseriell angeordnet. Weiterhin sind das erste Leistungshalbleiter-Bauteil 9.1 und das zweite Leistungshalbleiter-Bauteil 9.2 eingerichtet, um in einem eingeschalteten Zustand einen Ladestrom der Ladevorrichtung 3 zu leiten. Die Abschaltsteuervorrichtung 7 ist mit dem ersten Leistungshalbleiter-Bauteil 9.1 und dem zweiten Leistungshalbleiter-Bauteil 9.2 in nicht explizit dargestellter Weise wirkverbunden und eingerichtet zu deren jeweiliger Ansteuerung. Weiter ist die Abschaltsteuervorrichtung 7 eingerichtet, um einen Wert mindestens eines für den Ladestrom charakteristischen Ladeparameters zu erfassen, und in Abhängigkeit von dem erfassten Wert das erste Leistungshalbleiter-Bauteil 9.1 und/oder das zweite Leistungshalbleiter-Bauteil 9.2 abzuschalten und dadurch den Ladestrom zu unterbrechen.

Insbesondere weist die Abschalteinrichtung 1 einen ersten Anschluss 8.1 und einen zweiten Anschluss 8.2 auf, wobei die Abschalteinrichtung 1 über den ersten Anschluss 8.1 und den zweiten Anschluss 8.2 in einen Stromkreis integriert werden kann.

Insbesondere ist die Abschalteinrichtung 1 aufgrund des ersten Leistungshalbleiter-Bauteils 9.1 und/oder des zweiten Leistungshalbleiter-Bauteils 9.2 eingerichtet, um den Ladestrom reversibel zu unterbrechen.

Vorzugsweise ist die Abschalteinrichtung 1 ein autarkes - insbesondere von der Ladevorrichtung 3 unabhängiges - Bauteil, sodass der Ladestrom vorteilhafterweise auch bei einer Störung der Ladevorrichtung 3 - beispielsweise bei einem Software-Absturz - unterbrochen werden kann und/oder die Abschalteinrichtung 1 in eine bereits bestehende Ladevorrichtung 3 insbesondere als Nachrüstbauteil eingebaut werden kann.

Insbesondere ist die Abschaltanordnung 5 derart eingerichtet, dass ein positiver Ladestrom von dem zweiten Leistungshalbleiter-Bauteil 9.2 immer geleitet wird. Zusätzlich ist die Abschaltanordnung 5 derart eingerichtet, dass ein positiver Ladestrom von dem ersten Leistungshalbleiter-Bauteil 9.1 in Abhängigkeit von dem erfassten Wert des mindestens einen charakteristischen Ladeparameters unterbrochen wird. Weiterhin ist die Abschaltanordnung 5 derart eingerichtet, dass ein negativer Ladestrom von dem ersten Leistungshalbleiter-Bauteil 9.1 immer geleitet wird. Zusätzlich ist die Abschaltanordnung 5 derart eingerichtet, dass ein negativer Ladestrom von dem zweiten Leistungshalbleiter-Bauteil 9.2 in Abhängigkeit von dem erfassten Wert des mindestens einen charakteristischen Ladeparameters unterbrochen wird.

Vorzugsweise weist ein Leistungshalbleiter-Bauteil 9 mindestens einen Pluspol und mindestens einen Minuspol auf. Alternativ oder zusätzlich ist das erste Leistungshalbleiter-Bauteil 9.1 und/oder das zweite Leistungshalbleiter-Bauteil 9.2 unidirektional sperrend ausgebildet.

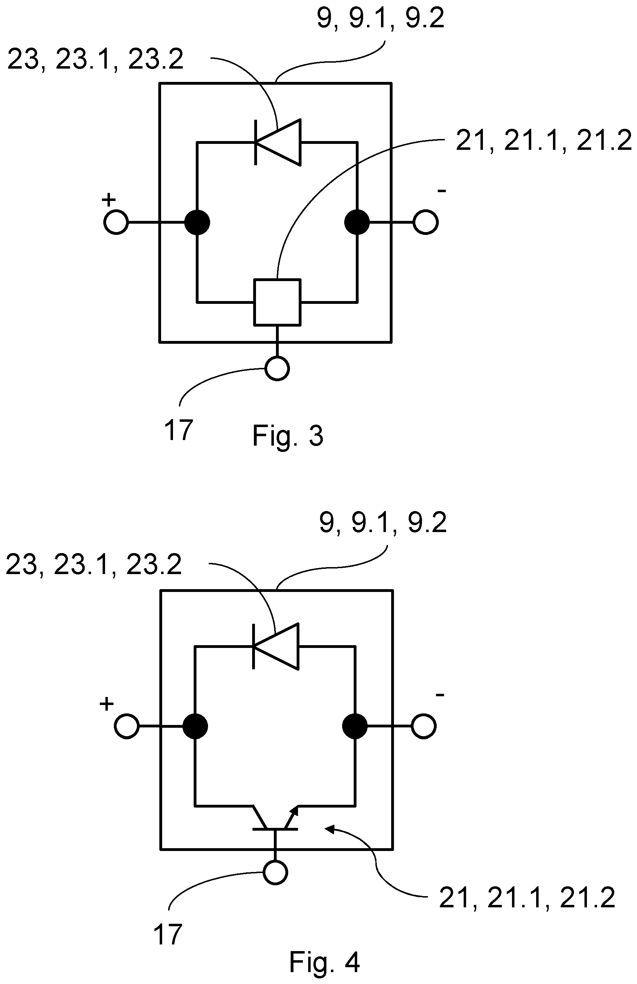

Besonders bevorzugt ist die Abschaltsteuervorrichtung 7 eingerichtet, um ein Abschaltsignal zu erzeugen und damit den Ladestrom zu unterbrechen. Alternativ oder zusätzlich ist die Abschaltsteuervorrichtung 7 eingerichtet, um den erfassten Wert mit einem Ladeparameter-Schwellenwert des mindestens einen charakteristischen Ladeparameters zu vergleichen, und in Abhängigkeit von dem Vergleich das erste Leistungshalbleiter-Bauteil 9.1 und/oder das zweite Leistungshalbleiter-Bauteil 9.2 abzuschalten und dadurch den Ladestrom zu unterbrechen, wobei insbesondere das erste Leistungshalbleiter-Bauteil 9.1 und/oder das zweite Leistungshalbleiter-Bauteil 9.2 ausgeschaltet und damit der Leistungsstrom unterbrochen wird, wenn der erfasste Wert des Ladeparameters größer ist als der Ladeparameter-Schwellenwert. Besonders bevorzugt ist die Abschaltsteuervorrichtung 7 eingerichtet, um den Ladeparameter-Schwellenwert variabel - insbesondere basierend auf mindestens einem den Ladestrom begrenzenden Ladeparameter-Grenzwert - einzustellen. Alternativ oder zusätzlich ist die Abschaltsteuervorrichtung 7 eingerichtet, um als den mindestens einen Ladeparameter einen Parameter, ausgewählt aus einer Spannung, einer Stromstärke, einem Stromstärkegradient, einem Magnetfeld, einer Leistung, einer Energieflussrichtung und einer Temperatur, zu erfassen. Alternativ oder zusätzlich ist die Abschaltsteuervorrichtung 7 eingerichtet, um das erste Leistungshalbleiter-Bauteil 9.1 und/oder das zweite Leistungshalbleiter-Bauteil 9.2 mittels einer Steuerspannung abzuschalten, wobei insbesondere die Steuerspannung an einem Steueranschluss 17 des Leistungshalbleiter-Bauteils 9 - dargestellt in Figur 3 - anliegt.

Darüber hinaus sind besonders bevorzugt das erste Leistungshalbleiter-Bauteil 9.1 und das zweite Leistungshalbleiter-Bauteil 9.2 identisch ausgebildet.

**Figur** 2 zeigt eine schematische Darstellung eines zweiten Ausführungsbeispiels der Abschalteinrichtung 1.

Gleiche und funktionsgleiche Elemente sind in allen Figuren mit denselben Bezugszeichen versehen, sodass insofern auf die vorangegangene Beschreibung verwiesen wird.

Die Abschalteinrichtung 1 gemäß Figur 2 weist zusätzlich mindestens eine Vorrichtung, ausgewählt aus einer Gruppe, bestehend aus einer Messvorrichtung 11, einer Temperiervorrichtung 13, einer Temperatursteuervorrichtung 15, einer Kommunikationsschnittstelle 17, einer Hilfsspannungsversorgung 19, und einer Kombination von mindestens zwei der genannten Vorrichtungen, auf.

Die Messvorrichtung 11 ist eingerichtet, um einen Wert des mindestens einen für den Ladestrom charakteristischen Ladeparameters direkt oder indirekt zu erfassen. Besonders bevorzugt ist die Messvorrichtung 11 eingerichtet, um die Leistung, die Stromstärke oder die Spannung direkt zu erfassen. Alternativ oder zusätzlich ist die Messvorrichtung 11 eingerichtet, um den Stromstärkegradient indirekt - indem ein für den Stromstärkegradient charakteristischer Messparameter gemessen wird - zu erfassen.

Insbesondere sind die Messvorrichtung 11 und die Abschaltsteuervorrichtung 7 in nicht explizit dargestellter Weise derart verbunden, dass der mittels der Messvorrichtung 11 erfasste Wert von der Messvorrichtung 11 an die Abschaltsteuervorrichtung 7 übermittelt wird. Alternativ oder zusätzlich ist die Abschaltsteuervorrichtung 7 eingerichtet, um den mittels der Messvorrichtung 11 erfassten Wert auszulesen.

Die Temperiervorrichtung 13 ist eingerichtet, um das erste Leistungshalbleiter-Bauteil 9.1 und/oder das zweite Leistungshalbleiter-Bauteil 9.2 zu temperieren.

Die Temperatursteuervorrichtung 15 ist eingerichtet, um eine Temperatur der Abschalteinrichtung 1 zu erfassen. Alternativ oder zusätzlich ist die Temperatursteuervorrichtung 15 eingerichtet, um eine Temperatur der Abschalteinrichtung 1 zu steuern, insbesondere zu regeln.

Besonders bevorzugt weist die Abschalteinrichtung 1 die Temperiervorrichtung 13 und die Temperatursteuervorrichtung 15 auf. Dabei sind die Temperatursteuervorrichtung 15 und die Temperiervorrichtung 13 wirkverbunden, wobei die Temperatursteuervorrichtung 15 eingerichtet ist, um die Temperiervorrichtung 13 anzusteuern und damit die Temperatur der Abschalteinrichtung 1 zu steuern, insbesondere zu regeln.

Die Kommunikationsschnittstelle 17 ist eingerichtet, um Informationen zu empfangen. Alternativ oder zusätzlich ist die Kommunikationsschnittstelle 17 eingerichtet, um Informationen zu versenden. Insbesondere ist die Kommunikationsschnittstelle 17 eingerichtet, um Informationen über einen Betriebszustand der Abschalteinrichtung 1 zu versenden und/oder Informationen - insbesondere zu einer mit einer Leistungsversorgungsvorrichtung 25 verbundenen Energiespeichervorrichtung 27 - von einer Recheneinheit 37 der Ladevorrichtung 3, insbesondere der Leistungsversorgungsvorrichtung 25, oder einer Erfassungsvorrichtung 39 - dargestellt in Figur 5 - zu empfangen.

Die Hilfsspannungsversorgung 19 ist eingerichtet, um die Abschaltsteuervorrichtung 7, das erste Leistungshalbleiter-Bauteil 9.1 und/oder das zweite Leistungshalbleiter-Bauteil 9.2 zu betreiben.

**Figur** 3 zeigt eine schematische Darstellung eines ersten Ausführungsbeispiels des Leistungshalbleiter-Bauteils 9, insbesondere des ersten Leistungshalbleiter-Bauteils 9.1 und/oder des zweiten Leistungshalbleiter-Bauteils 9.2.

Das Leistungshalbleiter-Bauteil 9 weist einen Halbleiter-Schalter 21 und eine Bauteil-Diode 23 auf, wobei der Halbleiter-Schalter 21 und die Bauteil-Diode 23 antiparallel angeordnet sind. Damit wird erreicht, dass ein elektrischer Strom, welcher von dem Pluspol des Leistungshalbleiter-Bauteils 9 zu dem Minuspol des Leistungshalbleiter-Bauteils 9 fließt, durch den Halbleiter-Schalter 21 geleitet wird, da die Bauteil-Diode 23 in Sperrrichtung angeordnet ist. Weiterhin wird erreicht, dass ein elektrischer Strom, welcher von dem Minuspol des Leistungshalbleiter-Bauteils 9 zu dem Pluspol des Leistungshalbleiter-Bauteils 9 fließt, durch die Bauteil-Diode 23 geleitet wird, da die Bauteil-Diode 23 in Durchlassrichtung angeordnet ist.

Darüber hinaus sind, aufgrund der anti seriellen Anordnung des ersten Leistungshalbleiter-Bauteils 9.1 und des zweiten Leistungshalbleiter-Bauteils 9.2 in der Abschaltanordnung 5 aus Figur 1 und Figur 2, ein erster Halbleiter-Schalter 21.1 und ein zweiter Halbleiter-Schalter 21.2 ebenfalls antiseriell in der Abschalteinrichtung 1 angeordnet. Damit bilden der erste Halbleiter-Schalter 21.1 und der zweite Halbleiter-Schalter 21.2 einen bidirektionalen Halbleiter-Schalter. Weiterhin ist es mittels der Halbleiter-Schalter 21 möglich, den Ladestrom mittels eines entsprechenden Gate-Signals und/oder der Steuerspannung - insbesondere über den Steueranschluss 17 - schnell zu unterbrechen. Zusätzlich sind, aufgrund der anti seriellen Anordnung des ersten Leistungshalbleiter-Bauteils 9.1 und des zweiten Leistungshalbleiter-Bauteils 9.2, eine erste Bauteil-Diode 23.1 und eine zweite Bauteil-Diode 23.2 ebenfalls antiseriell in der Abschaltanordnung 5 angeordnet.

Insbesondere ist die Abschaltsteuervorrichtung 7 mit dem Steueranschluss 17 elektrisch verbunden. Alternativ oder zusätzlich ist der Steueranschluss 17 als Gate-Anschluss des Halbleiter-Schalters 21 ausgebildet.

Besonders bevorzugt ist eine Kathode der Bauteil-Diode 23 dem Pluspol des Leistungshalbleiter-Bauteils 9 zugeordnet und eine Anode der Bauteil-Diode 23 ist dem Minuspol des Leistungshalbleiter-Bauteils 9 zugeordnet.

Besonders bevorzugt ist die Abschaltsteuervorrichtung 7 aus den Figuren 1 und 2 bei einer Ausbildung der Leistungshalbleiter-Bauteile 9 gemäß Figur 3 eingerichtet, um eine Halbleiter-Flussspannung des Halbleiter-Schalters 21 zu erfassen und daraus eine Stromstärke und/oder eine Spannung als den mindestens einen Ladeparameter zu ermitteln.

In einer ersten Ausgestaltung ist die Abschaltsteuervorrichtung 7 aus den Figuren 1 und 2 bei einer Ausbildung der Leistungshalbleiter-Bauteile 9 gemäß Figur 3 eingerichtet, um in Abhängigkeit von einer ersten Halbleiter-Flussspannung des ersten Halbleiter-Schalters 21.1 und einem Ladeparameter-Grenzwert ein erstes Überwachungssignal zu erzeugen. Zusätzlich ist die Abschaltsteuervorrichtung 7 eingerichtet, um in Abhängigkeit von einer zweiten Halbleiter-Flussspannung des zweiten Halbleiter-Schalters 21.2 und dem Ladeparameter-Grenzwert ein zweites Überwachungssignal zu erzeugen. Weiterhin ist die Abschaltsteuervorrichtung 7 eingerichtet, um in Abhängigkeit von dem ersten Überwachungssignal und dem zweiten Überwachungssignal das Abschaltsignal zur Unterbrechung des Ladestroms zu erzeugen. Insbesondere werden das erste Überwachungssignal und das zweite Überwachungssignal mittels einer Oder-Verknüpfung miteinander kombiniert, sodass das Abschaltsignal erzeugt wird, wenn das erste Überwachungssignal und/oder das zweite Überwachungssignal auf eine Fehlfunktion hindeutet.

In einer zweiten Ausgestaltung ist die Abschaltsteuervorrichtung 7 aus den Figuren 1 und 2 bei einer Ausbildung der Leistungshalbleiter-Bauteile 9 gemäß Figur 3 eingerichtet, um die erste Halbleiter-Flussspannung des ersten Halbleiter-Schalters 21.1, die zweite Halbleiter-Flussspannung des zweiten Halbleiter-Schalters 21.2, eine erste Bauteil-Dioden-Flussspannung der ersten Bauteil-Diode 23.1 und eine zweite Bauteil-Dioden-Flussspannung der zweiten Bauteil-Diode 23.2 zu erfassen. Zusätzlich ist die Abschaltsteuervorrichtung 7 eingerichtet, um in Abhängigkeit von der ersten Halbleiter-Flussspannung, der zweiten Halbleiter-Flussspannung, der ersten Bauteil-Dioden-Flussspannung und der zweiten Bauteil-Dioden-Flussspannung das Überwachungssignal zu erzeugen. Weiterhin ist die Abschaltsteuervorrichtung 7 eingerichtet, um in Abhängigkeit von dem Überwachungssignal und dem Ladeparameter-Grenzwert das Abschaltsignal zur Unterbrechung des Ladestroms zu erzeugen.

**Figur** 4 zeigt eine schematische Darstellung eines zweiten Ausführungsbeispiels des Leistungshalbleiter-Bauteils 9, insbesondere des ersten Leistungshalbleiter-Bauteils 9.1 und/oder des zweiten Leistungshalbleiter-Bauteils 9.2.

Der Halbleiter-Schalter 21 ist als n-Kanal Bipolartransistor mit isolierter Gate-Elektrode ausgebildet. Dabei ist ein Kollektor-Anschluss des n-Kanal Bipolartransistors dem Pluspol des Leistungshalbleiter-Bauteils 9 zugeordnet und ein Emitter-Anschluss des Bipolartransistors ist dem Minuspol des Leistungshalbleiter-Bauteils 9 zugeordnet.

Alternativ kann der Halbleiter-Schalter 21 als p-Kanal Bipolartransistor mit isolierter Gate-Elektrode ausgebildet sein. Dabei ist der Emitter-Anschluss des p-Kanal Bipolartransistors dem Pluspol des Leistungshalbleiter-Bauteils 9 zugeordnet und der Kollektor-Anschluss des n-Kanal Bipolartransistors ist dem Minuspol des Leistungshalbleiter-Bauteils 9 zugeordnet.

Alternativ kann der Halbleiter-Schalter 21 als n-Kanal Feldeffekttransistor, insbesondere als Metall-Oxid-Halbleiter-Feldeffekttransistor (MOSFET), ausgebildet sein. Dabei ist ein Drain-Anschluss des n-Kanal Feldeffekttransistors dem Pluspol des Leistungshalbleiter-Bauteils 9 zugeordnet und ein Source-Anschluss des n-Kanal Feldeffekttransistors ist dem Minuspol des Leistungshalbleiter-Bauteils 9 zugeordnet.

Alternativ kann der Halbleiter-Schalter 21 als p-Kanal Feldeffekttransistor, insbesondere als Metall-Oxid-Halbleiter-Feldeffekttransistor (MOSFET), ausgebildet sein. Dabei ist der Source-Anschluss des p-Kanal Feldeffekttransistors dem Pluspol des Leistungshalbleiter-Bauteils 9 zugeordnet und der Drain-Anschluss des p-Kanal Feldeffekttransistors ist dem Minuspol des Leistungshalbleiter-Bauteils 9 zugeordnet.

Besonders bevorzugt ist die Abschaltsteuervorrichtung 7 aus den Figuren 1 und 2 bei einer Ausbildung der Leistungshalbleiter-Bauteile 9 gemäß Figur 4 eingerichtet, um eine Basis-Emitter-Spannung des Bipolartransistors oder eine Gate-Source-Spannung des Feldeffekttransistors, zu erfassen und daraus eine Stromstärke und/oder eine Spannung als den mindestens einen Ladeparameter zu ermitteln.

**Figur** 5 zeigt eine schematische Darstellung eines ersten Ausführungsbeispiels der Leistungsversorgungsvorrichtung 25 als die Ladevorrichtung 3.

Die Leistungsversorgungsvorrichtung 25 weist mindestens eine Abschalteinrichtung 1 auf. Die hier nicht explizit dargestellte - Abschaltanordnung 5 der Abschalteinrichtung 1, insbesondere das erste Leistungshalbleiter-Bauteil 9.1 und das zweite Leistungshalbleiter-Bauteil 9.2, ist elektrisch in Reihe mit einer an die Leistungsversorgungsvorrichtung 25 anschließbaren Energiespeichervorrichtung 27 in einem Versorgungsstromkreis 29 der Leistungsversorgungsvorrichtung 25 eingebaut.

Vorzugsweise ist eine erste Abschalteinrichtung 1.1 in einem Vorrichtungsenergiespeicher 31 der Leistungsversorgungsvorrichtung 25 angeordnet. Alternativ oder zusätzlich ist eine zweite Abschalteinrichtung 1.2 in einem Ladekabel 33 der Leistungsversorgungsvorrichtung 25 angeordnet. Alternativ oder zusätzlich ist eine dritte Abschalteinrichtung 1.3 in einem Ladestecker 35 der Leistungsversorgungsvorrichtung 25 angeordnet.

Optional weist die Leistungsversorgungsvorrichtung 25 eine Recheneinheit 37 auf. Die Recheneinheit 37 ist in nicht explizit dargestellter Weise mit der Abschalteinrichtung 1 wirkverbunden. Zudem ist die Recheneinheit 37 eingerichtet, um Daten von der Abschalteinrichtung 1 zu empfangen. Alternativ oder zusätzlich ist die Recheneinheit 37 eingerichtet, um Daten an die Abschalteinrichtung 1 zu senden. Alternativ oder zusätzlich ist die Recheneinheit 37 eingerichtet, um Daten von der mit der Leistungsversorgungsvorrichtung 25 verbundenen Energiespeichervorrichtung 27 zu empfangen.

Besonders bevorzugt ist die Abschaltsteuervorrichtung 7 getrennt von der Recheneinheit 37 ausgebildet. Alternativ ist die Abschaltsteuervorrichtung 7 in die Recheneinheit 37 integriert oder als Recheneinheit 37 ausgebildet, wobei in diesem Fall eine erste Abschaltanordnung 5.1 in dem Vorrichtungsenergiespeicher 31 und/oder eine zweite Abschaltanordnung 5.2 in dem Ladekabel 33 und/oder eine dritte Abschaltanordnung 5.3 in dem Ladestecker 35 angeordnet ist.

Vorzugsweise ist die Abschaltsteuervorrichtung 7 eingerichtet, um mit einer Erfassungsvorrichtung 39 der Abschalteinrichtung 1 wirkverbunden zu werden. Weiterhin ist die Abschaltsteuervorrichtung 7 eingerichtet, um von der Erfassungsvorrichtung 39 - direkt und/oder indirekt - erfasste Daten, insbesondere den mindestens einen Ladeparameter-Grenzwert, einer Datenübertragung zwischen der Leistungsversorgungsvorrichtung 25 und der Energiespeichervorrichtung 27 zu empfangen. Insbesondere kann die Erfassungsvorrichtung 39 die Datenübertragung ohne eine galvanische Verbindung zu einem Datenübertragungsweg selbst erfassen - also quasi die Datenübertragung insbesondere elektrisch kontaktlos, insbesondere galvanisch entkoppelt, insbesondere induktiv, abhören. Dies erfolgt vorzugsweise an einer Leitung oder dem Ladekabel 33, beispielsweise mit einem vorzugsweise induktiven Datenschnüffler 41 als der Erfassungsvorrichtung 39.

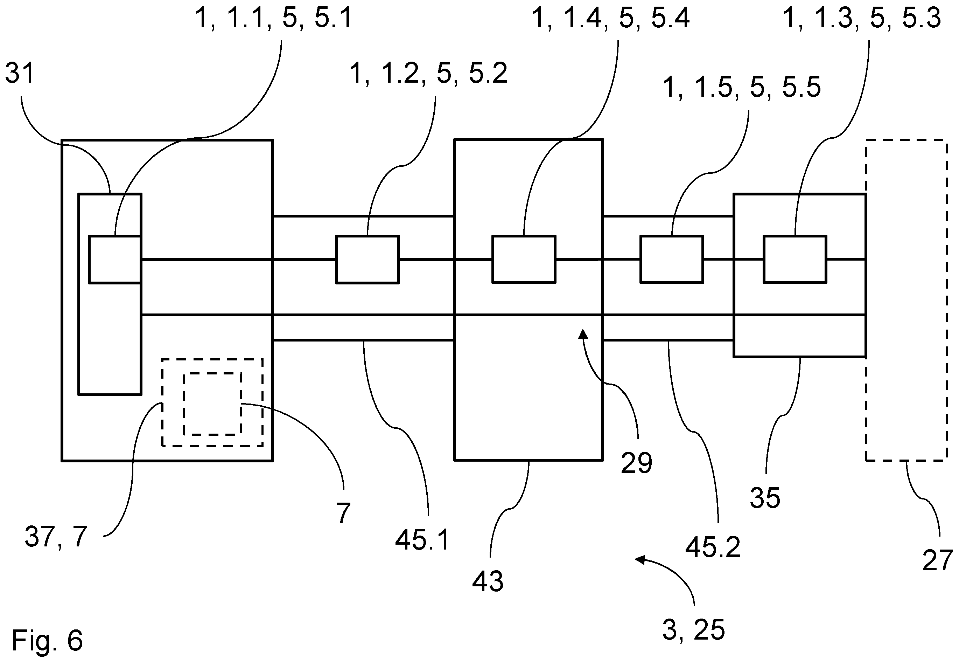

**Figur** 6 zeigt eine schematische Darstellung eines zweiten Ausführungsbeispiels der Leistungsversorgungsvorrichtung 25.

Die Leistungsversorgungsvorrichtung 1 gemäß Figur 6 basiert auf der Leistungsversorgungsvorrichtung 1 gemäß Figur 5 und weist zusätzlich eine Ladesäule 43 auf. Die Ladesäule 43 ist elektrisch zwischen dem Vorrichtungsenergiespeicher 31 und dem Ladestecker 35 angeordnet. Ein erstes Teilladekabel 45.1 verbindet den Vorrichtungsenergiespeicher 31 mit der Ladesäule 43 und ein zweites Teilladekabel 45.2 verbindet die Ladesäule 43 mit dem Ladestecker 35.

Weiterhin ist die mindestens eine Abschalteinrichtung 1 und/oder die mindestens eine Abschaltanordnung 5, insbesondere eine vierte Abschalteinrichtung 1.4 oder eine vierte Abschaltanordnung 5.4, in der Ladesäule 43 angeordnet. Vorzugsweise ist zusätzlich die erste Abschalteinrichtung 1.1 und/oder die erste Abschaltanordnung 5.1 in dem Vorrichtungsenergiespeicher 31 angeordnet. Alternativ oder zusätzlich ist die zweite Abschalteinrichtung 1.2 und/oder die zweite Abschaltanordnung 5.2 in dem ersten Teilladekabel 45.1 angeordnet. Alternativ oder zusätzlich ist die dritte Abschalteinrichtung 1.3 und/oder die dritte Abschaltanordnung 5.3 in dem Ladestecker 35 angeordnet. Alternativ oder zusätzlich ist eine fünfte Abschalteinrichtung 1.5 und/oder eine fünfte Abschaltanordnung 5.5 in dem zweiten Teilladekabel 45.1 angeordnet.

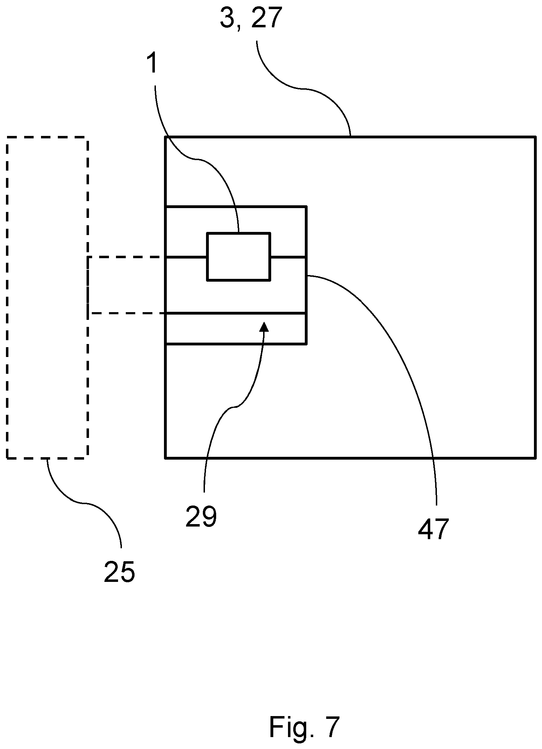

**Figur** 7 zeigt eine schematische Darstellung eines Ausführungsbeispiels der Energiespeichervorrichtung 27 als die Ladevorrichtung 3.

Die Energiespeichervorrichtung 27 weist die Abschalteinrichtung 1 auf. Die Abschaltanordnung 5 der Abschalteinrichtung 1, insbesondere das erste Leistungshalbleiter-Bauteil 9.1 und das zweite Leistungshalbleiter-Bauteil 9.2, ist elektrisch in Reihe mit einer an die Energiespeichervorrichtung 27 anschließbaren Leistungsversorgungsvorrichtung 25 in einem Versorgungsstromkreis 29 der Energiespeichervorrichtung 27 eingebaut.

Besonders bevorzugt ist die Abschalteinrichtung in eine Ladesteckdose 47 der Energiespeichervorrichtung 27 integriert.

## Patentansprüche

1. Abschalteinrichtung (1, 1.1, 1.2, 1.3, 1.4, 1.5) für eine elektrische Ladevorrichtung (3, 25, 27) mit einer ein erstes ansteuerbares Leistungshalbleiter-Bauteil (9, 9.1) und ein zweites ansteuerbares Leistungshalbleiter-Bauteil (9, 9.2) aufweisenden Abschaltanordnung (5, 5.1, 5.2, 5.3, 5.4, 5.5) und einer Abschaltsteuervorrichtung (7), wobei
- das erste Leistungshalbleiter-Bauteil (9, 9.1) und das zweite Leistungshalbleiter-Bauteil (9, 9.2) antiseriell angeordnet sind, wobei
- das erste Leistungshalbleiter-Bauteil (9, 9.1) und das zweite Leistungshalbleiter-Bauteil (9, 9.2) eingerichtet sind, um in einem eingeschalteten Zustand einen Ladestrom der Ladevorrichtung (3, 25, 27) zu leiten, wobei
- die Abschaltsteuervorrichtung (7) mit dem ersten Leistungshalbleiter-Bauteil (9, 9.1) und dem zweiten Leistungshalbleiter-Bauteil (9, 9.2) wirkverbunden und eingerichtet ist zu deren jeweiliger Ansteuerung, wobei
- die Abschaltsteuervorrichtung (7) eingerichtet ist, um einen Wert mindestens eines für den Ladestrom charakteristischen Ladeparameters zu erfassen, und
- in Abhängigkeit von dem erfassten Wert das erste Leistungshalbleiter-Bauteil (9, 9.1) und/oder das zweite Leistungshalbleiter-Bauteil (9, 9.2) abzuschalten und dadurch den Ladestrom zu unterbrechen.

2. Abschalteinrichtung (1, 1.1, 1.2, 1.3, 1.4, 1.5) nach Anspruch 1, wobei die elektrische Ladevorrichtung (3, 25, 27) eine elektrische Leistungsversorgungsvorrichtung (25) und/oder eine elektrische Energiespeichervorrichtung (27) ist.

3. Abschalteinrichtung (1, 1.1, 1.2, 1.3, 1.4, 1.5) nach einem der vorhergehenden Ansprüche, wobei die Abschaltsteuervorrichtung (7) eingerichtet ist, um den erfassten Wert mit einem Ladeparameter-Schwellenwert des mindestens einen charakteristischen Ladeparameters zu vergleichen, und in Abhängigkeit von dem Vergleich das erste Leistungshalbleiter-Bauteil (9, 9.1) und/oder das zweite Leistungshalbleiter-Bauteil (9, 9.2) abzuschalten und dadurch den Ladestrom zu unterbrechen.

4. Abschalteinrichtung (1, 1.1, 1.2, 1.3, 1.4, 1.5) nach Anspruch 3, wobei die Abschaltsteuervorrichtung (7) eingerichtet ist, um den Ladeparameter-Schwellenwert variabel einzustellen.

5. Abschalteinrichtung (1, 1.1, 1.2, 1.3, 1.4, 1.5) nach einem der vorhergehenden Ansprüche, wobei die Abschaltsteuervorrichtung (7) eingerichtet ist, um als den mindestens einen charakteristischen Ladeparameter einen Parameter, ausgewählt aus einer Spannung, einem Spannungsgradient, einer Stromstärke, einem Stromstärkegradient, einem Magnetfeld, einer Leistung, einer Energieflussrichtung, und einer Temperatur, zu erfassen.

6. Abschalteinrichtung (1, 1.1, 1.2, 1.3, 1.4, 1.5) nach einem der vorhergehenden Ansprüche, wobei
- das erste Leistungshalbleiter-Bauteil (9, 9.1) einen ersten Halbleiter-Schalter (21, 21.1) und eine erste Bauteil-Diode (23, 23.1) aufweist, wobei
- der erste Halbleiter-Schalter (21, 21.1) und die erste Bauteil-Diode (23, 23.1) antiparallel angeordnet sind, wobei
- das zweite Leistungshalbleiter-Bauteil (9, 9.2) einen zweiten Halbleiter-Schalter (21, 21.2) und eine zweite Bauteil-Diode (23, 23.2) aufweist, und wobei
- der zweite Halbleiter-Schalter (21, 21.2) und die zweite Bauteil-Diode (23, 23.2) antiparallel angeordnet sind.

7. Abschalteinrichtung (1, 1.1, 1.2, 1.3, 1.4, 1.5) nach einem der vorhergehenden Ansprüche, wobei die Abschaltsteuervorrichtung (7) eingerichtet ist, um mittels einer Steuerspannung das erste Leistungshalbleiter-Bauteil (9, 9.1) und/oder das zweite Leistungshalbleiter-Bauteil (9, 9.2) abzuschalten, wobei die Steuerspannung zum Abschalten des ersten Leistungshalbleiter-Bauteils (9, 9.1) und/oder des zweiten Leistungshalbleiter-Bauteils (9, 9.2) vorzugsweise höchstens 0 V beträgt.

8. Abschalteinrichtung (1, 1.1, 1.2, 1.3, 1.4, 1.5) nach einem der vorhergehenden Ansprüche mit einer Temperiervorrichtung (13), wobei die Temperiervorrichtung (13) eingerichtet ist, um zumindest das erste Leistungshalbleiter-Bauteil (9, 9.1) und/oder das zweite Leistungshalbleiter-Bauteil (9, 9.2) zu temperieren, insbesondere zu kühlen oder zu heizen, wobei die Temperiervorrichtung (13) vorzugsweise als Wasserkühlung oder Luftkühlung ausgebildet ist.

9. Abschalteinrichtung (1, 1.1, 1.2, 1.3, 1.4, 1.5) nach einem der vorhergehenden Ansprüche mit einer Temperatursteuervorrichtung (15), wobei die Temperatursteuervorrichtung (15) eingerichtet ist, um eine Temperatur der Abschalteinrichtung (1, 1.1, 1.2, 1.3, 1.4, 1.5) zu erfassen und/oder zu steuern.

10. Abschalteinrichtung (1, 1.1, 1.2, 1.3, 1.4, 1.5) nach einem der vorhergehenden Ansprüche mit einer Kommunikationsschnittstelle (17), wobei die Kommunikationsschnittstelle (17) eingerichtet ist, um Informationen zu empfangen und/oder zu versenden.

11. Abschalteinrichtung (1, 1.1, 1.2, 1.3, 1.4, 1.5) nach Anspruch 10, wobei die Kommunikationsschnittstelle (17) eingerichtet ist, um Informationen über einen Betriebszustand der Abschalteinrichtung (1, 1.1, 1.2, 1.3, 1.4, 1.5) zu versenden und/oder Informationen einer Recheneinheit (37) zu empfangen.

12. Abschalteinrichtung (1, 1.1, 1.2, 1.3, 1.4, 1.5) nach einem der vorhergehenden Ansprüche mit einer Hilfsspannungsversorgung (19), wobei die Hilfsspannungsversorgung (19) eingerichtet ist, um die Abschaltsteuervorrichtung (7), das erste Leistungshalbleiter-Bauteil (9, 9.1) und das zweite Leistungshalbleiter-Bauteil (9, 9.2) zu betreiben.

13. Leistungsversorgungsvorrichtung (3, 25) mit einer Abschalteinrichtung (1, 1.1, 1.2, 1.3, 1.4, 1.5) nach einem der vorhergehenden Ansprüche, wobei die Abschaltanordnung (5) elektrisch in Reihe mit einer an die Leistungsversorgungsvorrichtung (3, 25) anschließbaren Energiespeichervorrichtung (3, 27) in einem Versorgungsstromkreis (29) der Leistungsversorgungsvorrichtung (3, 25) eingebaut ist.

14. Leistungsversorgungsvorrichtung (3, 25) nach Anspruch 13 mit einer Recheneinheit (37), wobei die Recheneinheit (37) mit der Abschalteinrichtung (1, 1.1, 1.2, 1.3, 1.4, 1.5) wirkverbunden und eingerichtet ist, um Daten von der Abschalteinrichtung (1, 1.1, 1.2, 1.3, 1.4, 1.5) zu empfangen und/oder Daten an die Abschalteinrichtung (1, 1.1, 1.2, 1.3, 1.4, 1.5) zu senden.

15. Leistungsversorgungsvorrichtung (3, 25) nach einem der Ansprüche 13 oder 14 mit einem Vorrichtungsenergiespeicher (31), einem Ladekabel (33) und einem Ladestecker (35), wobei die Abschalteinrichtung (1, 1.1, 1.2, 1.3, 1.4, 1.5) in
a) dem Vorrichtungsenergiespeicher (31), und/oder
b) dem Ladekabel (33), und/oder
c) dem Ladestecker (35),
angeordnet ist.

16. Leistungsversorgungsvorrichtung (3, 25) nach einem der Ansprüche 13 bis 15 mit einer Ladesäule (43), wobei die Ladesäule (43) elektrisch zwischen dem Vorrichtungsenergiespeicher (31) und dem Ladestecker (35) angeordnet ist, und wobei ein erstes Teilladekabel (45.1) den Vorrichtungsenergiespeicher (31) mit der Ladesäule (43) und ein zweites Teilladekabel (45.2) die Ladesäule (43) mit dem Ladestecker (35) verbindet, und wobei die Abschalteinrichtung (1, 1.1, 1.2, 1.3, 1.4, 1.5) in der Ladesäule (43) angeordnet ist.

17. Leistungsversorgungsvorrichtung (3, 25) nach einem der Ansprüche 13 bis 16, mit einer Verkleidung, wobei die Verkleidung eine Wartungsklappe aufweist, und wobei die Abschalteinrichtung (1, 1.1, 1.2, 1.3, 1.4, 1.5) derart in der elektrischen Leistungsversorgungsvorrichtung (3, 25) angeordnet ist, dass zumindest das erste Leistungshalbleiter-Bauteil (9, 9.1) und/oder das zweite Leistungshalbleiter-Bauteil (9, 9.2) über die Wartungsklappe ausgetauscht werden kann.

18. Leistungsversorgungsvorrichtung (3, 25) nach einem der Ansprüche 13 bis 17, wobei die Leistungsversorgungsvorrichtung (3, 25) als Ladestation zum elektrischen Laden einer an die Leistungsversorgungsvorrichtung (3, 25) angeschlossenen Energiespeichervorrichtung (3, 27) ausgebildet ist.

19. Energiespeichervorrichtung (3, 27) mit einer Abschalteinrichtung (1, 1.1, 1.2, 1.3, 1.4, 1.5) nach einem der Ansprüche 1 bis 12, wobei die Abschaltanordnung (5, 5.1, 5.2, 5.3, 5.4, 5.5) elektrisch in Reihe mit einer an die Energiespeichervorrichtung (3, 27) anschließbaren Leistungsversorgungsvorrichtung (3, 25) in einem Versorgungsstromkreis (29) der Energiespeichervorrichtung (3, 27) eingebaut ist.
